(19) Europäisches Patentamt
European Patent Office
Office européen des brevets

(11) Publication number: **0 183 535 B1**

# (12) EUROPEAN PATENT SPECIFICATION

(45) Date of publication of patent specification: **29.04.92**

(51) Int. Cl.5: **G06K 1/12**, G06K 5/02, B41J 29/38

(21) Application number: **85308613.0**

(22) Date of filing: **27.11.85**

Divisional application 90202276.3 filed on 27/11/85.

## (54) Self-correcting printer-verifier.

(30) Priority: **30.11.84 US 676571**

(43) Date of publication of application: **04.06.86 Bulletin 86/23**

(45) Publication of the grant of the patent: **29.04.92 Bulletin 92/18**

(84) Designated Contracting States: **DE FR GB IT NL SE**

(56) References cited:
**EP-A- 0 073 124**
**WO-A-82/01163**
**FR-A- 2 234 993**
**US-A- 4 048 494**
**EP-A- 0 115 027**
**DE-A- 2 605 602**
**GB-A- 2 077 970**
**US-A- 4 422 376**

(73) Proprietor: **TOHOKU RICOH CO., LTD.**
**3-1, Shinmeido Nakanomyo**
**Shibata-machi Miyagi-Prefecture(JP)**

(72) Inventor: **Ulinski, Richard J. SR.**
**322 Prospect Avenue**
**Monrovia California 91016(US)**
Inventor: **Clarke, Hugh C.**
**174 West Wistaria Avenue**
**Arcadia California 91006(US)**
Inventor: **Evers, Richard A.**
**221 South Magnolia Avenue**
**Monrovia California 91016(US)**
Inventor: **Stevens, Richard N.**
**509 West Duarte road Unit B**
**Monrovia California 91016(US)**

(74) Representative: **Haigh, Charles Roy et al**
**J.A. KEMP & CO. 14 South Square Gray's Inn**
**London WC1R 5EU(GB)**

EP 0 183 535 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to the art of printing, and more particularly to apparatuses and methods for printing and verifying the precision of bar codes, and correcting subsequent prints of bar codes on labels and sheets.

Bar codes in various forms are now familiar as identifying and pricing indicia for various commodities and material; and are used to record pricing information and material handling and locating information on commodities and products in application as varied as grocery store checkouts and inventory control. Bar codes typically comprise vertical bars of dark, non-reflective lines of varying widths interspaced by highly light-reflective spaces of varying widths. A group of such bars and spaces, representing a "symbol" is scanned by optical scanners reflecting light off the bars and spaces to photodetectors which distinguish the difference between the dark bars and the reflective spaces, and of their relative widths.

To distinguish between the relative widths of bars and of spaces, processing of the information from the scanned code must distinguish the time of the scanner's pass over the bars and spaces. Usually, great tolerances must be afforded to the different, varying widths in order to accommodate a substantial variability in the speed or velocity of the optical scanner, and to accurately distinguish between bars, or non-reflective areas and spaces, or highly reflective areas.

It is greatly desired to reduce the widths of the bars and spaces generally conceded to tolerances without sacrificing accuracy in the optical scanning, in order to increase the information in a given space and to increase the reliability of the information read-out in the scanning procedure. For example, it has been shown to print an alignment mark to trigger the commencement of an optical bar code scanning at a precise point, with the objective of reducing the symbol space, as is shown US-A-4,349,741, where the alignment mark is scanned contemporaneously with the printing so as to position the scanner at the centre of the bar code, and thus increase the accuracy in the scanning of the code.

Thermal printers have been known and preferred in many application where non-impact printing is a desired goal. Thermal printers are characterised by the controlled application of precise amounts of heat, either by a print element head or pixel to a paper sensitive to the temperature to produce an optically readable print, or to a thermally sensitive ribbon adjacent the paper to be printed, in which by the application of heat to the ribbon, optically readable material is melted onto the paper. In such thermally sensitive printing, precision in the temperature of the printing elements is important. Methods and apparatuses for sensing the temperature and correcting or controlling the temperature to the print head in response to the sensed temperature have been described, for example, in the dot matrix printer controls of US-A-3,577,137 and US-A-4,449,033.

While greatly improving the quality of thermal printing, it is still desired to have an apparatus which self-corrects the precise widths of the bars and spaces in a bar code during the printing process in response to a contemporaneous read-out of the immediately preceding printed code, and potentially independent of temperature sensing. It is further desired to have a bar code printer having contemporaneous read-out and verification of the printed code, and automatic rejection of code which does not fit within pre-defined width dimension tolerances of precision for the bars and spaces. It is a further desired objective to have bar code printers automatically positioning the edge of labels to be printed in such a printing and verifying printer. It is desired yet further to have a printer with the self-correcting and contemporaneous verification features in a non-impact printer.

EP-A-0 115 027 published 08.08.84 corresponding to US-A-4587411 (Obstfelder et al) discloses a printer for bar codes in which the just-printed section is scanned and compared with the input data. If there is an error in the printing the remainder of the label is blackened to prevent its use.

The present invention provides a printer comprising printing means having a print head responsive to applied drive signals for printing indicia on a sheet; scanning means arranged to scan the indicia and to produce a scanner output signal representative thereof; control means connected to the scanning means and to the printing means, the control means being arranged to generate drive signals and to apply the said drive signal to the print head to actuate printing; characterized in that the control means include print-characteristic adjusting means responsible to the scanner output signal and arranged to alter the drive signals to correspondingly alter the physical characteristics of subsequently imprinted indicia to correct them.

The invention also provides a method of operating a printer having a print head responsible to applied head drive signals including scanning an indicia imprinted on a sheet and producing a scanner output signal representative of the scanned printed indicia; characterized by operating upon the scanner output signal to determine the dimensional deviation of the indicia from predetermined desired dimensions; altering the energy content of the head drive signals in accordance with the dimensional deviation to reduce the dimensional deviation of subsequently imprinted indicia; and printing a further indicia.

The printer may also include a void imprinter selectively actuable for printing a void indication on a field of imprinted indicia on the sheet; the control means also including means for operating upon the scanning signals to compute an out of limit condition for the dimensions or for reflectance characteristics of the printed indicia, the control means being responsive, when a computed out of limit condition exits, for actuating the void imprinter to imprint a void indication on the corresponding field of printed indicia.

Thus, the invention as claimed may provide a non-impact bar code printer comprising a thermal printer combined with an optical scanning system for reading indicia, such as bar code imprinted on labels, longitudinally extended sheets and the like.

Further optional features of the invention will now be briefly described.

A longitudinally extended sheet normally having gummed labels mounted on the sheet is advanced through a thermal printer capable of applying heat directly to a thermally sensitive paper, or of applying heat to burn or melt thermally sensitive ribbon onto the sheet. The leading edge of the labels on the extended sheet is sensed by two successively positioned photodetecting paths sensing the degree of opacity of the paper passing through the light path. Differential voltage signals resulting from the initial passing of the leading edge through the first, but not the second of the detectors generates a differential signal from a differential amplifier, which signal is shaped and amplified to form a digital signal to a print control processor for advancing the label on the extended sheet through the thermal printer, and for initiating the print cycles at the correct time when the label is properly positioned juxtaposed the printing elements of the thermal printer.

A transport assembly holding a paper path tray and drive rollers is capable of movement in order to present easy access to the print area and to the area through which the paper must be initially fed. When moved into the print position, the transport assembly can be latched into place, and the print head can be variably positioned so as to apply more or less pressure against the sheets to be printed. A control panel and readout display provide operational accessibility to the functioning of the printer and verifier.

Integral with the printer is an optical scanner positioned to transversely scan the sheet subsequent to the printing operation. The scanner and printer are controlled by a master control processor, in turn controlling a scanner control processor and a print control processor. By use of stepper motors, two drive rollers advance the sheet so that the area, such as the label to be imprinted is precisely positioned juxtaposed printing elements of a thermal line printer. The printing elements or pixels on the print head are driven by print head drivers controlled by the print control processor in the control system. Data is input to a master control processor from a disk terminal or other computer, and a label description buffer is created so that the master control processor can set up the print control processor.

After printing, the printed sheet is scanned by an optical scanner driven by a scanner stepper drive motor transversely from one side to the other side of the printed sheet. In a first pass, the optical scanner establishes a reflectivity threshold by determining peaks or averages of reflectivity in the printed code. In the reverse pass, the widths of the individual bars and spaces are measured, and the measurement dimensions sent through a scan head driver and interface to a scanner control processor, thence to a measured data buffer or memory. The scanner is limited in its transverse pass by a right limit switch and a left limit switch each comprising a light path in a photodetector circuit interrupted by flanges on the scanner head assembly. At the left limit switch, the direction of the scanner assembly on its path defined by the scanner cable is reversed. At the right limit switch, the scanner assembly stops in a nesting position with the reading head reading a calibration plaque for calibrating the detection circuit of the scanner.

The master control processor has established in a verified print quality buffer the standard widths which the individual bars and spaces of the printed code should have, and compares the actually measured dimensions of the bars and spaces with the standard. A deviation between the actually measured dimensions and the standard dimensions is established, and recorded in a print deviation buffer or memory. Averages are taken of the deviation, and if these averages exceed a predetermined tolerance limit, a correction signal is generated to modify the time pulse at the print head drive signal selection in the print control processor to increase or decrease the voltage application time for the individual print elements for the bars in the symbol found to be intolerably deviant from the standard.

The control system through a master control processor can generate signals to actuate a "void" stamp solenoid to brand the rejected label, and to actuate other alarm indicators as may be desired. Further, a command is generated to cause the printer to reprint the rejected label or page.

The invention may be carried into practice in various ways and one specific embodiment, and its method of operation, will now be described, by way of example, with reference to the drawings, in which

Figure 1 is perspective view of a printer and verifier of the preferred embodiment of the present invention.

Figure 2 is another perspective view of the printer and verifier of Figure 1, having certain elements removed and others cut-away for clarity;

Figure 3 is a detailed perspective view of the scanning head and printing elements of the embodiment of Figure 1;

Figure 4 is a side elevational, cross-sectional view of the optical scanning head of Figures 2 and 3;

Figure 5 is a perspective view of the print head;

Figure 6 is a detailed side elevation view of the pressure setting arm of the embodiment of Figure 1;

Figure 7 is a front elevation view of the sprocket and label edge detector;

Figure 8 is a perspective view of the sprocket and label edge detector of Figure 7, showing the interior detector elements and the overall casing in broken line for clarity;

Figure 9 is an electrical schematic design of the sprocket and label edge detector circuit;

Figure 10 is a detailed side elevation view of the "void" solenoid and linkage of the embodiment of Figure 1;

Figure 11 is a perspective view of the scanning head and printing elements of the embodiment in an alternative mode of operation;

Figure 12 is a block diagram of the operation of the embodiment;

Figure 13 is a block schematic diagram of the control system;

Figure 14 is a flow diagram showing the operation of the embodiment;

Figure 15 is a path diagram of the optical scanning path;

Figure 16 is a flow diagram of the processes of the correction signal generation; and

Figures 17, 18 and 19 are map diagrams of memory buffers within the process control.

Initially referring to Figures 1 and 2 of the drawings, a self-correcting printer and verifier 10 for printing indicia, such as a bar code 12 on a longitudinally extended sheet 14 is depicted in perspective view. The sheet 14 travels in the direction of arrows 16 through the printer-verifier 10 from a row or a fanfolded stack of edge connected sheets forming an indeterminate length of paper, often times sprocketed on the linear edges for advancement by sprocket wheels. The paper may be thermally sensitive paper of the kind which, when a certain level of heat is applied adjacen the paper will form marking or printing on the paper. As will be explained in greater detail below, other types of paper may also be used, such as an extended sheet of backing having a series of successive gummed labels mounted on it.

The printer and verifier 10 is comprised of printer chassis sidewalls 17 and a chassis base 19 in effect housing many of the operative elements, and providing mounting for substantially all of the elements. To the front of the printer 10, a control and display panel 20 including a read-out digital display 22 is shown.

A paper transport assembly 24 is shown movably mounted to the chassis sidewalls 17 on rails 26 to move forward and rearwardly in the direction of double arrow 28. The rails 26 are connected to the sidewalls 17 be chassis mounts 25. The transport assembly 24 may be secured in the forward or operating position by a convenient latching system, not shown which is released by latch lever 30.

A print head platen 32 is mounted to the transport assembly 24 for driving the paper 14 in the paper path, which will be explained in greater detail shortly. Mounted between the sidewalls 17, as depicted in Figure 1 is a roll 34 of thermal printing ribbon 35 which is fed from a spool about which it is wrapped, to the take-up roll 36 for the printing ribbon, wrapped around spool 38.

The ribbon take-up roll spool 38 is held between the sidewalls 17 on one side by a ribbon take-up roll mandrel or cone 40, manipulated on the outside of the wall 17 by mandrel knob 42, and on the other side of the spool 38 by a mandrel or cone capable of being driven by shaft 44. The shaft 44 is driven by a ribbon tension servo 46. The motor current to the servo 46 is controlled by a signal responsive to a sensing of the tension of the printing ribbon 35, as more fully explained with reference to Figure 11, below.

The fee roll 34 of the printing ribbon 35 is similarly held between the sidewalls 17. On one side, as seen in Figure 1, the ribbon mandrel or cone 48 engages the roll spool, and allows for relatively free rotation of the roll 34.

A solenoid 50 is connected by solenoid linkages 52 to drive a "void" stamp, as will be explained in greater detail below.

a print head pressure setting arm 54 can be rotated about its spindle, and fixed by set screw 56 at various set notches 58 for controlling the pressure of the print head 90 (Figure 2) against the paper 14, as explained further in relation to Figure 6.

An optical head encoder 60 is mounted on a common shaft with a right optical head cable pulley 62 for providing accurate location information of a scanning head 100, again described in greater detail below.

A pinch roller lever 66 operates as a cam for a pinch roller 68 to pinch firmly the paper 14 between it and a paper tension drive roller 70 operably positioned in the transport assembly 24.

In Figure 2, the sheet advancing system is depicted in greater detail. A toothed timing belt 72 drives a sprocket wheel 74 which is axially connected to the paper tension drive roller 70. The timing belt 72 is driven by a gear 76, which is connected to another gear 78. The gear 78 is driven by a paper drive motor 80 through a gearing 82 connected to the shaft of paper drive motor 80. The gear 78 is axially connected to the print head platen 32 to provide the main driving force for the paper 14. An adjustable tension roller 84 is provided to control the tension of the toothed belt 72.

A paper path tray 88 is provided to guide the paper 14 along a proper paper path.

The print head 90, comprising a print head circuit board 92 holding the print elements 94 (Figure 3) and a head sink 96 is positioned in operable and printing relationship to the paper 14 opposite a vertical back wall of the tray 88.

A sprocket and label edge detector system 98 is depicted at a point at the beginning of the paper path where paper 14 enters into the paper transport assembly 24.

The scanning head 100 is movably positioned to read the bar code 12 printed on the paper 14 by traversing the lateral width of the paper 14 in the direction of arrows 102. As better seen in Figure 3, the scanning head 100 comprises an optical slide assembly 101 slidably mounted on rail 103 and stabilized by slider assist guide 104. An optical head cable 105 is connected to the optical slide assembly 101, and is looped around the head cable pulley 62 at the right end (as viewed from the front), and a head cable pulley 106 at the left end. Tensioning pulleys 107 are provided to maintain the head cable 105. The pulley 106 is mounted to the shaft of a scanner stepper drive motor 108.

An optical head or block 109 is mounted within the optical slide assembly 101.

Limit switches 110, 111 are positioned at each end of the scanner traverse path 102. Each limit switch 110, 111 comprises a vertical light path, having a light emitting diode (LED) light source and a photodetector. The light path is positioned to be interrupted by one or the other of two flanges 112, 113 flaring from the optical slide assembly 101. The controller for the optical slide assemble receives the signal resulting from the interruption of the light path in either of the limit switches 110, 111, and stops the transverse of the scanner head 100. In the case of the left limit switch 111, the scanner head traverse is reversed, and the scanner head 100 commences a selective reverse scan of the printed matter. The scanner head 100 upon return to the right side stops upon interrupting, by its right flange 112 the limit switch 110, in its nesting position.

A calibration plaque 115 (Figure 2) is provided having both a standard darkness area 116 and a standard reflective area 117. The dark area 116 is designed to reflect only two percent (2%) of light focused on it, while the highly reflective area 117 should reflect approximately 80% of light focused upon it. The calibration plaque 115 can be used, when the scanning head 100 is in its nesting position, to test or verify the operation of the light path and of the scanning and reading circuits. Additionally, the light reflectivity sensitivity of the scanner's photodetectors can be calibrated from the reflective plaque 117.

A ribbon strip plate 118 (shown and described in detail in relation to Figure 11) is provided with an articulated tensioning arm 119 to guide the thermal printing ribbon 35, if used, from the paper 14 after a printing step.

The tensioning arm 119 can provide, further, a signal to control the direct current ribbon tension servo 46, as will be explained more fully with reference to Figure 11.

A "void" stamp or marker 112 (Figure 3) comprises an ink pad 124, and is mounted to move in the direction of arrow 126 to engage the paper 14, as will be more fully explained with respect to Figure 10. A thermistor 120 (also Figure 3) is mounted to the heat sink 96 for use in temperature stabilization of the print head 90. Temperature control by sensing the heat sink temperatures is possible.

In Figure 4, the optical head or block 109 is shown in cross-section elevation. A light source mounting block 128 houses three light emitting diodes (LED's) providing light. Lens 132 is movably set within the light path 133. The lens may be fixed in any conventional manner as by a set screw, for example. The block 109 comprises, in addition, an aperture 134 for controlling flare of the light within a path 133. A photodetector 136 is at the end of the light path 133 to detect the contrast between the reflective and non-reflective surfaces scanned. The light source mounting block 128 is a press-fit onto the optical block 109 in order to align the LED's 130 to the sheet 14 to be scanned, and to provide access to the lens 132 for movement in order to focus the image along the light path 133. The number of LED's is not crucial but it is desirable for a sufficient number of them to be used to diffuse the illumination and make the light reflected independent of paper peculiarities, such as grain.

In Figure 5, the print head 90 is depicted. The print head circuit board 92 contains the printing elements or pixels 94. In the preferred embodiment, 1728 pixels are linearly arranged along a single line at a distance of 0.5 mils (0.018mm) apart, each pixel having a width of approximately 0.5 mils (0.018mm). The heat sink 96 comprises a metal block which is mounted on the circuit board 92. There is a maximum area of surface-to-surface contact therebetween in order to have the greatest possible heat transfer. The thermistor 120 (Figure 3) may be used to monitor the temperature of the heat sink 96, and in turn the printing elements 94. A cover 95 (Figure 5) is shown covering the circuit board 92.

In Figure 6, the details of the print head pressure setting arrangement are depicted in cross-section elevation. The print head pressure setting arm 54 rotates about an axle 141 connecting the arm 54 to a cam 140, which engages a cover plate for the print head 90. When the arm 54 is rotated in the direction of the arrow 142, the printing end of the print head 90 is moved in the direction of arrow 144 into a greater pressure contact with the sheet 14. The arm 54 can be fixed in position by turning the set screw 56 into any of the notches 58, and thereby maintaining the desired pressure of the print head 90 against the sheet 14.

In Figures 7 and 8, the operation of the sprocket and label edge detector system is shown. The linear edges of the longitudinally extended sheet 14 pass between light sources, comprising LED's 148 and photodetectors 150 shown in broken line in Figure 8. The edge detectors 98 can be moved horizontally along the directions of arrow 152 and fixed to the chassis frame 154 in relation to the sheet 14 by bolts 156.

Photodetectors 150 detect light from the source 148 through the sheet 14. Whenever the opacity of the sheet changes, such as when the edge of a label 158 passes therethrough, the voltage level of the photodetector 150 will alter. In its quiescent state, the voltage received by amplifiers 160 and 162 (Figure 9) from the photodetectors 150, representatively shown as points 2 and 3 in Figure 9, will be relatively comparable, and after amplification will provide comparable inputs to a difference amplifier 164. The comparator 164 will provide a low output to another amplifier 166 until the inputs of amplifier 164 are different. Upon detecting a difference of at least a value which is determined by a divider 165, the amplifier 164 gives a high output which is amplified by the amplifier 166. The amplifier 166 forms the signal more into a digital pulse, which after forming by diodes 167, is amplified to 5 volts by an amplifier 168 to produce a signal to the ribbon and paper drive feed drivers and interface 222 with a Print Control Processor (PCP) 210 (Figure 14). A control signal controlling the paper drive motor 80 thus is generated. In the control system, the paper stepper drive motor 80 then advances sheet 14 a predetermined distance calculated as the distance between the edge detector 98 and the point of engagement by the printing elements 94 to the sheet 14.

In operation, when an edge of a portion of sheet 14 having different opacity, such as the label 158, first interrupts the light path from the light source 148 to the detector 150, the first amplifier 160 receives a different voltage input representative of the different opacity, causing in turn a high output signal from the differential amplifier 164. This output signal is eliminated when the voltage to amplifiers 162, 164 is changed by a certain amount predetermined by the divider 165, representing detection by the second photodetector 150 of the same leading edge of different opacity, such as the leading edge of the label 158. The output signal of differential amplifier 164 is then low. The signal briefly generated is formed through the amplifiers 166, 168 to result in a digital start signal to the print control processor to commence printing at a precisely clocked time subsequent to the receipt of the signal, calculated to be the precise time that the edge, or some set distance beyond the edge of the label 158 as it is advanced by the paper drive motor 80 to the paper path position opposite the printing elements 94.

In Figure 10, the solenoid 50 operating the "void" stamp (122) is depicted. The rod of the solenoid 50 operates through the linkages 52 to rotate an arm 121 of the stamp 122 in the direction of the arrow 126 so that the ink pad 124 will engage or stamp impressions upon the paper 14. The solenoid 50 is actuated at any time that the processor control determine that a bar code deviates from standard or acceptable tolerances, so as to reject the bar code so printed, whether it is a portion of a longitudinally extended sheet 14, or a particular label mounted on such a sheet. It is denominated as "void" stamp because it is contemplated that the word "void" will be formed on the ink pad for stamp printing. any other symbol, of course, could be formed on the pad 124 to imprint whatever indicia might be desired.

In Figure 11, an alternative mode of operating the preferred embodiment of the invention is shown. The preferred embodiment of the invention will operate equally using the print head 90, whether the paper 14 is comprised of a thermally sensitive paper which will produce an imprinted indicia upon the application of heat from the printing elements 94, or may be ordinary paper against which a thermally responsive ribbon 35 is heated so as to transfer to or melt on the paper 14 a dark imprint when the thermal ribbon 35 is heated by the pixels of the heating elements 94. In Figure 11, the printing by use of a thermal ribbon 35 is depicted. The ribbon 35 is rolled off of ribbon roll 34 onto take-up roll 36 would around its core 38. The path of the ribbon 35 is guided around a ribbon guide 172. The platen 32 drives the sheet 14, and consequently drives the ribbon 35 which is adjacent to and held in friction contact with it by virtue of the pressure set by the print head 90. The path of the ribbon 35 is then stripped from sheet 14 by the ribbon strip plate 118 and over the articulated tensioning arm 119.

The tensioning arm 119 can provide a movement to a potentiometer to generate a correspondingly varying voltage as a control to the ribbon tension servo 46, and thus to increase or decrease the motor current to the direct current servo 46. The servo 46 then keeps a rotary axle pressure on the core 38 in order to keep the ribbon 35 taut and to prevent fouling with the optical scanning block 109 and the light amounting block 128. The path through which ribbon 35 traverses is kept clear of the stamp 122 and its operational space, also.

Figure 12 is a block diagram which diagrammatically shows the inter-relationships between the major elements comprising the preferred embodiment. The self-correcting printer and verifier 190 includes a printer 192 for printing indicia, such as bar code symbols on a print medium such as the longitudinally extended sheet 14. The sheet 14 may include successive pages or may include successive spaced labels 158 imprinting thereon. Thus successive pages or labels of sheet may have corresponding successive fields of indicia printed thereon. The printed indicia 12 is read by a scanner 194 including a reading element 196. the printer 192 is controlled by a control system 200 by control signals directed along a path 202. Printer feedback signals may provide some information along a path 204 to the control system 200 to assist in controlling the printer 192 in its primary printing operations. The control system 200 also provides control signals along a path 208 to control and operate the scanner 194 to scan printed indicia at a time subsequent to its imprinting on sheet 14. the scanner 194 also produces scanner feedback signals applied to control system 200 along a path 206 which signals includes a scanner output signal representative of the scanned printed indicia and also may include encoded scanner position signals which gives control system 200 information as to the position along the line at which the scanner is reading. The control system 200 receives the scanner feedback signals along the path 206, and uses the scanner output signal to modify the printer control signals applied to the printer along the path 202 to modify, in turn, the characteristics of the printed indicia 12.

It should be noted that the control system 200 controls the stepper motor 80 in its incremental advancement of sheet 14. The control system 200 will have received the edge or label detector sensing signal sensing the position of an edge, for example, and by sensing the incremental advances of the sheet 14, will have precise information of the location of an edge, including information of whether a label is located juxtaposed the printer head. In situations where the print operation creates its own printed edges or borders, the control system 200 will have the number o incremental advances beyond the end of the last edge so as to be able to locate precisely the beginning of the next succeeding label's leading edge.

In general, the printer 192 may or may not contribute printer feedback signals along the path 204 to the master control system 200. If a thermal printer is utilized, where the temperature of the printing elements are crucial, a temperature feedback signal may be returned which is generated by a thermistor mounted on the heat sink for the thermal print head and may be used to control energy applied to the printing elements, for example, by providing information for controlling the amplitude of a voltage pulse driving the printing element. Such temperatures feedback control is well known in the prior art but is extremely slow and delayed in operation because of the very large thermal time lags in a thermal print head.

In instances of printing on a series of spaced, removable labels mounted on sheet 14, the printer 192 may use a label edge detector to generate label edge feedback signals at the leading edge of such labels to communicate to the control system 200 the precise location of the label, so that the control system 200 can generate print commands when the label is correctly positioned in relation to the printing elements.

It can be appreciated, that thermistor generated temperature feedback signals may not be utilized when the printer 192 is not a thermal printer, for example if it is a laser printer. Similarly, label edge detector feedback may not be utilized if the printer is not printing on sheet carried labels or similar sections.

In the preferred embodiment of the invention, which utilizes a dot matrix thermal printer, temperature feedback control of drive pulse energy content is supplemented or replaced by a much faster acting control method which scans printed indicia to determine dimensional deviation of the printed indicia from predetermined desired dimensions and quickly alters energy content of drive pulses to the print element in accordance with such dimensional deviation to reduce the dimensional deviation of subsequent printed indicia. This is a quick acting system in which imprinted dot size is increased or decreased in accordance with the alterations of drive pulse energy content to thereby increase or decrease the dimensions of the printed indicia.

The scanner may include as its reading head 196 an optical scanning head of the preferred embodiment. the scanner output signal produced by reading head 196 represents precisely the dimensions along the scan path of the scanned printed indicia, such as bar code 12. The control system 200 operates upon the feed back scanner output signals to compute dimensional deviation of the scanned printed indicia from predetermined desired dimensions, which are stored in control system 200. The computed deviation is used to correct or modify the printer drive signals applied to the printer along path 202 from control system 200. Thus, the control system 200 can command the printer to increase or to decrease the elemental dot sizes to thereby increase or decrease the width of the bars in the code 12, in the response to the magnitude of the dimensional deviation of the previously printed code 12 from its pre-defined desired dimensions. The computed deviation can also be used by the control system to control a "void" stamp, and to apply command signals along path 202 to reprint a voided label, page or other printed field rejected by the void stamp. The control system 200 also operates to control the sheet advance drive, and also the thermal ribbon drive, if thermal ribbon is used, and controls the selection of those print head elements which are to receive print head drive signals.

In Figure 13, a block schematic diagram of the control system 200 is shown. The control system 200 includes a master control processor (MCP) 209 and a print control processor (PCP) 210, which share a common random access memory (RAM) 212. The MCP 208 receives commands from a scanner control processor (SCP) 214, which has its own RAM 216. The SCP 214 is operatively connected to the scan head drivers and interface 218 from which emits the scanner drive motor control, and through which the SCP 214 receives information from the scanning head and the right and left limit signals from the limit switches. The scanner position encoder, such as the optical head encoder, generates signals interfaced by the scan head interface 218 to the SCP 214.

Information supplied through the interface 218 from the scanning head includes a scanner output signal representative of the reflectance (reflectivity) of scanned printed bars and spaces and thereby representative of the precise width of the printed bars, which information is prepared by the SCP 214 and transferred to the MCP 209 for comparison with prestored desired reflectances and dimensions for the scanned bars and spaces. The MCP 209 from such comparisons computes an averaged dimensional deviation for the scanned bars which it makes available to the PCP 210 for altering a print time control number, i.e. the Dot Time Count Reference number (Figure 16), which is used to generate a print control signal whose time duration is proportional to the Dot Time Count Reference number. The print control signal thus is used to drive, i.e. to switch on the print head drivers 220 to set the time of the voltage pulse driving and printing elements.

In the present thermal line printer, the print head drivers each comprise a switching circuit which is switched "on" to pass current through a circuit which includes a corresponding printing element. Each head driver comprises such a switching circuit in association with a corresponding input gate and bistable memory element. Bistable memory element is setable to a "1" or a "0" value and controls the gate to pass or not to pass an applied print control signal through it to the switch circuit, selectably to drive thereby the switching circuit for the duration of the print control signal to switch voltage to the printing element. Thus, overall the entire set of head drivers can be considered as a register of memory elements each selectably controlling whether the corresponding switch can be actuated by the print control signal pulse in accordance with the "1" or "0", i.e., print or non-print, values set into and stored in the "register".

The print control signal is thus an actuating signal determining the "on" time of the application of current to the printing element, causing the printing element to heat. The printing element is in close proximity, and in some instances in contact with the print medium, such a paper. Where thermally sensitive paper is used, the printing element, when heated, will cause the thermally sensitive paper to darken or to create an image comparable in shape to the printing element. The more heat that is generated during the print cycle, the more area on the paper is darkened. Similarly, in those thermal printing operations which employ a thermal ribbon, the thermal ribbon is moved or advanced adjacent to the paper to be imprinted, and the printing element is positioned opposite the thermal ribbon from the paper. When the printing element is heated by the application of voltage, adjacent coating of the thermal ribbon is melted by the heat of the printing element, and transferred onto the paper to create the darkened image. The longer that the voltage is applied to the printing element, the more of the ribbon coating adjacent the printing element will be melted and transferred onto the paper.

Thus, it may be appreciated that the width of the line created by one or more adjacent printing elements can be widened or narrowed by the corresponding increase or decrease in the amount of time that the printing element is being heated by the application of voltage in t he driving circuit. Consequently, the application of a longer or greater time duration print control signal pulse to the switch which switches current through the print element will correspondingly increase the width of the line printed by that printing element. Similarly, the width of the imprinted line can be narrowed by correspondingly decreasing the print control signal pulse duration.

The print control processor 210 also generates those signals necessary to control the sheet drive motor 80 which controls not only the advancement of the sheet, but also the advancement of the ribbon in those application where thermal ribbon is used. The signals to drive the sheet drive motor 80 are interfaced through the ribbon and paper drive feed drivers and interface 222. Through the same interface 222, signals from the sprocket and label edge detector are received by the PCP 210, which generates the signals necessary to advance the sheet and the thermal ribbon to position the labels or other portion of the sheet to be printed in juxtaposed with the print head before signals from the PCT 210 actuate the print head drivers 220.

The MCP 209, on the basis of the comparison of the widths of the actually printed bars and their spaces with the predefined or predetermined measured widths, and of the print deviation resulting from this comparison, determines whether the deviation is within or not within tolerances. In the event that the deviation is not within tolerances, a command flows to alarm/voider drivers 224 to generate a signal to the "void" stamp solenoid, and to such other alarm indications as may be employed, such an alarm light, alarm sounds and the like.

Figures 14 and 16 present a flow diagram of the operations of the preferred embodiment of the present invention. In Figure 14, the operation begins with power-up 230 which activates a start print operation or routine 232 in the MCP 209. In the start print operation, various counters and flag bits within the processors are initialized.

At the conclusion of the start print operation, the load print operation 234 is initiated within the MCP 209. The print data can come from a disk terminal 236 or from another computer. The data will include definitions of the symbols and indicia to be printed, and quality definitions against which printing is to be verified and to which later printing is to be corrected. At the conclusion of the load print operation 234, the prepare print buffer operation 238 is initiated in the MCP 209. In this operation, the page/label description buffer 240 is loaded with the data defining the symbols and indicia to be printed.

At the conclusion of the load print operation 234, the print set-up operation 242 is initiated in the MCP 209. It should be noted at this point that, except for loading some specialized information and data relating to the quality of definitions and standards for the printing, the operation is conventional for printers, which customarily have operations loading page data into processor memory for controlling the printing operations.

In the print-set operation, the quality definition data is formatted into the verify print quality buffer 258 for a complete page or label of printed information. The detail of the verify print quality buffer 258 can be seen in the map diagram of Figure 17. The buffer comprises a 32 bit word memory storing the quality standards against which the printed symbols are to be compared. In the first word is placed a Light Maximum Standard, i.e., a value representing the minimum reflectance at which and above which an unprinted area will be accepted as a space. In the first word also is stored a Light Minimum Standard, i.e., a value representing the maximum reflectance at which and below which a printed area will be accepted as a bar. Data representative of the minimum contrast is also placed in the first word. The contrast is defined as the Light Maximum minus the Light Minimum, and in the verify print quality buffer the minimum acceptable contrast of the standards for these data is stored. Further, a minimum print contrast signal (PCS) is placed. The PCS is defined as the quotient of the light maximum minus light minimum (or, the contrast) divided by the light maximum. For each bar and each space in the symbol, a word is dedicated. In the least significant digits, the nominal dimension is stored. Filling out the word, the maximum positive and negative tolerances are placed for each bar and space. The end of the symbol is signified by a word of zeros, and thereafter the same information is recorded for the second and successive symbols. The end of the buffer is signified by two zero words.

In the print set-up operation the print dot matrix buffer 243 is also prepared. All data necessary to specify the printing elements to be energized and those not to be energized are placed in the print dot matrix buffer 243 for a complete page, label or other field of printed information. In the thermal printer of the preferred embodiment, a printed row is made up of 1,728 dots across the width of the sheet 14, each of these dots being printed or not printed by its corresponding printing element in accordance with the requirements of the symbol or line to be printed. All the information required for printing such a printed row, and for printing all successive printed rows on a page or label, is stored in the print dot matrix buffer 243 by the MCP 209 during the print set-up operation 242. Each print or dot row is stored in the buffer 243 as a corresponding row of "1"s and "0"s, i.e. mapped into the binary memory cells of the words of the print dot matrix buffer 243. In successive print operations, each successive dot row is read out of the print dot matrix buffer 243 and copied through an intermediate dot row buffer into the corresponding bistable memory element of each print each driver, so that the array of print head drivers is switched, upon actuation by the print control signal, "on" or "off" in accordance with the contents, i.e. the "1"s and "0"s of the corresponding row of the print dot matrix buffer 243.

In many printers, the printing is made by a rectangular dot matrix of dots which are either activated or energized, or not, in order to form a symbol on the printed sheet. The preferred embodiment of the present invention, uses a thermal line printer where the matrix is, in effect, a horizontal row of printing elements against which the sheet is moved vertically.

As an example, for bar code printing in the print set-up operation, the MCP 209 may register into the print dot matrix buffer 243 signals to determine which of the printing elements 94 are to be turned "on" during the print cycle to create the lines in the bar code, and which of the printing elements are to be left "off" to create spaces between the bars. The resultant picture formed on the printed page is the result of printing element dots arranged in a matrix of dots and spaces, i.e., a rectangular array of rows and columns of dots. The pattern of which of the particular dots are to be energized and thus heated, and which ones are to be left "off" in order to form the desired image on the printed paper, are mapped into the binary memory cells of the print dot matrix buffer 243.

At the conclusion of the print set-up operation 242, the print operation 244 is initiated in the PCP 210. The print dot matrix buffer 243 is available to the PCP 210, and from such data the sheet drive motor 80 is incremented, and selection signals are provided to establish which of the printing elements are to be energized for each step of the stepper motor 80. The symbols then are printed on the sheet 14. Further, the print operation initiates the scanning operations, as indicated by the connection 1-1 in the diagram of Figure 14.

The scanning operations are initiated by the initiation of the start scan operation 250 in the MCP 209. Similar to the start print operation, the start scan operation initializes counters and flag bits. At the conclusion of the start scan operation 250, the scan operation 252 is initiated in the SCP 214. The scan control, the operation of the scanning or reading of the printed sheet or labels is timely initiated. When the printed symbols are moved into proper scanning alignment for the scanning head, the scanning head is moved in a double traverse across the printed line of symbols, for example, bars and spaces. The control command initiates the scanner stepper drive motor to move the scanning head from its quiescent or nesting position on the right of the scan path, and the scanning head 100 reads the printed line from right to left in a first traverse or pass, as representatively shown in Figure 15 of the drawings. The first pass will appear to the sheet 14 to be at a slight downward slope to the left as the sheet 14 will be moved during the pass. The movement of the sheet 14 will be, for one traverse in the preferred embodiment approximately 0.25 inch (6.4 mm) and therefore the double pass will be approximately 0.5 inch (12.7 mm), so that the entire scanning operation will be accomplished within the pass-by of the printed line. When the scanning head 100 interrupts the light path of the left limit switch 111, the scanning is reversed in its traverse to pass from the left back to the right, along the lower traverse or pass line as diagrammatically shown in Figure 15. The optical head encoder 60 presents information to the SCP 214 during scan control operation 252 so that the scan read starts at the correct line or lateral position when the scanning head 100 is at the symbol to be verified.

In the first traverse pass, the scanning head output signal provides a measure of the reflectance of the bars and spaces, and SCP 214 places the measured Light Maximum reflectance (i.e., the maximum reflectance of the spaces) and the Light Minimum reflectance (i.e., the minimum reflectance of the bars) into the measured data buffer 256, the details of which are seen more clearly in Figure 18. In the reverse traverse from left to right, the transitions of the output signal are utilized to determine the vertical boundaries of bars and spaces, and thus the precise dimensions of each bar and space. In the scan control operation, the width of each bar and of each space for each symbol is representatively placed in the measured data buffer 256. A word in the buffer is dedicated for each bar and each space, as well as for the measured Light Maximum and Light Minimum. The end of the symbol is signified in the buffer 256 by a word of zeros with a "1" in the most significant digit. The end of the buffer is signified by two successive words of zeros with a "1" in the most significant digit, as is shown in Figure 18.

At the conclusion of scan control operation 252, the completed measured data of buffer 258 are made available to the MCP 209, by being copied thereto through the SCP 214, and the verify operation 260 is initiated in the MCP 209. In the verify operation, the MCP 209 compares the measured data with the data in the verify print quality buffer 258, and computes deviations of the bar and space dimensions, Light Maximums and Light Minimums, all read by the scanning head on the one head, from the corresponding desired bar and space dimensions and reflectance standards established in the verify print quality buffer 258 on the other hand. The completed deviation information is stored in the print deviation buffer 262, seen more clearly in detail in Figure 19 of the drawings. For each symbol, the average of deviations of all the bars is computed and placed in the first word dedicated to the symbol, with a reservation of the most significant digit for purposes that will be discussed below. In the second word dedicated to that symbol, is placed a count of the number of bars and spaces in a symbol which are out of tolerance specification with respect to the corresponding nominal dimensions. Further, the second word, if any of the PCS, Light Maximum or Light Minimum values are outside the bounds set in the verify print quality buffer 258, corresponding out-of-bound indicating flags are placed in the, respectively, most, next most and third most significant digits. In the third word dedicated to the symbol, a computed count is placed of the number of bars and spaces which exceed the tolerance by a predetermined gross amount, which may be a multiple of the normal tolerance.

At the completion of the verify operation 260, the page/label scan completion operation 266 is initiated in the MCP 209. In the page/label scan completion step 266, the average bar, space and light contrast deviations for an entire line as placed in the print deviation buffer 262 are seen (Figure 19). If all bits in the first and second words for all symbols of a page or label are "0", a normal print command is transmitted through line or connection 2-2, shown in Figure 14, to initiate the prepare print buffer 238 for its next page or label in the ordered course. However, if any bit in words one or two are "1", that is if any bar, space or light contrast measurement exceeds the predetermined tolerance limit, a command is given in conjunction with operation 238, after completing the page or label, to reprint the page or label which in the initial printing exceeded the deviation tolerances preset into the verify print quality buffer 258. If the deviations are within predetermined tolerances, a normal print instruction can be given in the connection 2-2 so that the printing operation following after operation 238 may proceed as set forth above. Additionally, in the event that the width dimensions of the bars of a bar code of a particular page or label exceed that of predetermined tolerances, the page/label scan completion step includes a command to the "void", stamp solenoid to actuate an imprint upon the label as "void", and to actuate visual and audio alarms as may be desired. If any bit in the third word indicates by a "1" a "gross" deviation, a command is given to stop all printing and to alert operators to the gross error.

The print deviation buffer 262 is made available to the PCP 210, which in its print operation 244 can generate commands to self-correct the time duration of the voltage applied to the individual printing elements, so as to tend to reduce print bar and space width deviations, as will be explained in greater detail below.

In Figure 16, the interaction of the print deviation measurements from the buffer 262 in the print operation 244 in the PCP 210 to achieve the self-correction of the printing is diagrammatically set forth. The print step 244 is initiated at the completion of the print set-up operation 244 in the MCP 209. The bar width deviations from the print deviation buffer 262 are summed and averaged for a full line, and this average resultant bar deviation for the line is scaled 270 to put the count in compatible form to that already in use in the PCP for generating the print control signals driving the print head drivers 220. As the flow diagram indicates, during the start print operation, a flag A 272 is set at zero, so that for a first flow sequence, i.e. each first line, the scaled bar deviation 270 is subtracted from the dot time count standard to produce a dot time count reference 274. The flag A 272 is then set at "1" and a counter A is set to zero. The negative or complemental value of the dot time count reference is stored in counter A. After counter A receives a negative time count reference value, counter A is incremented by a fast clock until it overflows, during which time a positive print control pulse is sent to the print head drivers 220 by the PCP 210 in the print step 244 of Figure 14. When the counter A has overflowed, the voltage "on" pulse 278 to the print head drivers is terminated. In subsequent line cycles, when the flag A 272 is "1", the scaled bar deviation is subtracted from the old dot time count reference to produce a new dot time count reference 275 for storing in counter A. Thus it can be seen that the dot time count reference is a print time control number or value generated by the print operation 244 of the PCP that controls the time duration of the print control signal. The dot time count reference is updated and altered in accordance with the calculated dimensional deviations so as to tend to reduce these deviations.

This application describes subject matter described and claimed in copending European application No. 90202276.3 which was divided from this.

## Claims

1. A printer (10) comprising printing means having a print head (90) responsive to applied drive signals for printing indicia (12) on a sheet (14); scanning means (100) arranged to scan the indicia (12) and to produce a scanner output signal (206) representative thereof; control means (200) connected to the scanning means and to the printing means, the control means being arranged to generate drive signals (202) and to apply the said drive signal to the print head (90) to actuate printing; characterized in that the control means (200) include print-characteristic adjusting means responsive to the scanner output signal (206) and arranged to alter the drive signals (202) to correspondingly alter the physical characteristics of subsequently imprinted indicia to correct them.

2. A printer as claimed in Claim 1 in which the print head (90) is adapted for dot matrix thermal printing and includes a plurality of individually-actuable printing elements (94) arranged in a predetermined dot array, each element being responsive to application of a drive signal (202) thereto and generating heat to imprint a corresponding spot on the sheet (14), the size of the spot being related to the energy content of the applied drive signal.

3. A printer as claimed in Claim 1 or Claim 2 in which the print characteristic adjusting means is arranged to alter the energy content of the drive signals (202) in response to the scanner output signal (206).

4. A printer as claimed in Claim 1 or Claim 2 or Claim 3 in which the print characteristic adjusting means is arranged to alter the time duration of the drive signal (202) in response to the scanner output signal (206).

5. A printer as claimed in any one of the preceding claims in which the print characteristic adjusting means is arranged to operate upon the scanner output signal (206) to compute the dimensional deviation of imprinted indicia (12) from predetermined desired dimensions and to alter the energy content and/or the time duration of the drive signals (202) in accordance with the value of such dimensional deviation to reduce the dimensional deviation of subsequently printed indicia (12).

6. A printer as claimed in Claim 5 further including a void imprinter (122) selectively actuable for printing a void indication on a field of printed indicia (12), the control means (200) including means (50) for actuating the void imprinter when the dimensional deviation exceeds a predetermined limit.

7. A printer as claimed in Claim 6 in which the control means (200) normally controls the printing means to print successive fields of indicia (12) but is also operable after an actuation of the void imprinter (122) for reprinting the voided field.

8. A printer as claimed in Claim 5 or Claim 6 or Claim 7 in which the print head (90) is arranged to print indicia comprising bar code symbols having aligned imprinted bars separated by non-imprinted spaces, and in which the print characteristic adjusting means is arranged to determine the dimensional deviation as the deviation in width of imprinted bars or spaces from predetermined desired widths, thus reducing the bar width deviation of subsequently imprinted bar code symbols.

9. A printer (10) according to Claim 1 further comprising a void imprinter (122) selectively actuable for printing a void indication on a field of imprinted indicia (12) on the sheet (14); the control means (200) also including means for operating upon the scanning signals to compute an out of limit condition for the dimensions or for reflectance characteristics of the printed indicia (12), the control means being responsive, when a computed out of limit condition exits, for actuating the void imprinter (122) to imprint a void indication on the corresponding field of printed indicia.

10. a method of operating a printer having a print head (90) responsive to applied head drive signals including scanning indicia (12) imprinted on a sheet (14) by the printer and producing a scanner output signal (206) representative of the scanned printed indicia (12); characterized by operating upon the scanner output signal to determine the dimensional deviation of the indicia (12) from predetermined desired dimensions; altering the energy content of the head drive signals (202) in accordance with the dimensional deviation to reduce the dimensional deviation of subsequently imprinted indicia; and printing further indicia (12).

11. A method as claimed in Claim 10 in which the operating upon the scanner output signal is to determine the dimensional deviation in width of the scanned imprinted indicia (12)from predetermined desired width dimensions of the printed indicia, along the scan path.

**12.** A method as claimed in Claim 10 or Claim 11 in which the energy content of the head drive signals (202) is altered by altering the time duration of the head drive signals in accordance with the determined dimensional deviation.

**13.** A method as claimed in any one of Claims 10 to 12 also including printing a void indication on the sheet in association with the scanned printed indicia (12) when the determined dimensional deviations exceeds predetermined limits.

**14.** A method as claimed in Claim 13 which includes the additional step, after the void indication has been printed, of reprinting the indicia (12) in a successive print field.

**15.** A method as claimed in any one of Claims 10 to 14 in which the printer is a dot matrix printer adapted for printing bar code symbols, the dimensional deviation determined is the dimensional deviation of the scanned bar code signals from predetermined desired dimensions, and the energy content is altered to alter the size of subsequent imprinted dot elements to reduce the dimensional deviation of subsequently imprinted bar code symbols.

**16.** A method as claimed in Claim 15 in which the dimension deviation is determined from the difference in the measured and desired values of the bar or space widths.

**17.** A method of repetitively printing indicia including printing the indicia (12) on a field with a print head (90) having controllable printing elements and electronically scanning the indicia after the printing; characterised in that to correct the indicia and correct quality in successive repeated printings of said indicia the method further comprises the steps of comparing the printed indicia (12) against a pre-defined standard of the indicia and producing a print control signal representative of any difference between the pre-defined standard and the printed indicia; using the print control signal to control the printing elements of the print head (90) to alter characteristics of successively printed indicia to correct them.

**18.** A method according to any one of claims 10 to 17 further including a method of determining the leading edge of each of a series of successively positioned labels (158), and moving the labels into position adjacent printing elements within the printer, comprising the steps of moving each label (158) successively through a first light path comprised of a first light source (148) and a first photodetector (150) capable of detecting light through the label; producing a first electrical signal representative of the change in opacity when the label is moved through the first light path; further moving the label through a second light path comprised of a second light source (148) and a second photodetector (150) capable of detecting light through the label; producing a second electrical signal representative of the change in opacity when the label is moved through the second light path; and comparing the first electrical signal with the second electrical signal and producing therefrom a digital initiate signal for initiating an operation routine in a control processor, whereby a print operation routine is initiated operating the printer (10) to print indicia (12) on the label (158) when the label is positioned adjacent the printing elements.

**19.** A method as claimed in Claim 18 further comprising the steps of incrementally advancing the individual labels (158) from the first and second light paths a predetermined distance along a label path to the position adjacent the printing elements by a stepper motor (80).

**20.** A method as claimed in Claim 18 or Claim 19 in which each of the labels (158) is positioned upon a longitudinally extended carrier sheet which is advanced along a sheet travel path by an incrementally advancing motor means (80), and in which the first and the second light paths comprise photodetectors (148) capable of detecting light through the carrier sheet and the labels (158), and in which the first and the second electrical signals so produced are signals representative of a change in opacity of the carrier sheet without the label (158) thereupon and the carrier sheet with the label thereupon.

**21.** A method as claimed in any one of Claims 18 to 20 in which, after each of the steps of producing the first and the second electrical signals, the electrical signals are not compared unless each of the electrical signals exceeds a predetermined minimum voltage representative of a minimum change in opacity.

**22.** A printer according to claim 1 further comprising apparatus for determining the leading edge of each of a series of successively positioned labels (158), and moving the labels into position adjacent printing elements within the printer, comprising means (24) for moving each label (158) successively through a first light path comprised of a first light source (148) and a first photodetector (150) capable of detecting light through the label and a second light path comprised of a second light source (148) and a second photodetector (150) capable of detecting light through the label; means (160) for producing a first electrical signal representative of the change in opacity when the label is moved through the first light path; means (162) for producing a second electrical signal representative of the change in opacity when the label is moved through the second light path, a comparator (164, 165, 166) comparing the first electrical signal with the second electrical signal and producing therefrom a digital initiate signal for initiating an operation routine in a control processor, whereby a print operation routine is initiated operating the printer (10) to print indicia (12) on the label (158) when the label is positioned adjacent the printing elements.

**Revendications**

**1.** Imprimante (10) comportant des moyens d'impression possédant une tête d'impression (90) sensible à des signaux d'excitation appliqués pour imprimer des signes (12) sur une feuille (14); des moyens d'analyse (100) agencés pour analyser les signes (12) et pour produire un signal de sortie d'analyseur (206) représentatif de ceux-ci; des moyens de commande (200) reliés aux moyens d'analyse et aux moyens d'impression, les moyens de commande étant agencés pour générer des signaux d'excitation (202) et pour appliquer ledit signal d'excitation à la tête d'impression (90) pour effectuer une impression, caractérisée en ce que les moyens de commande (200) comprennent des moyens de réglage de caractéristique d'impression sensibles au signal de sortie d'analyseur (206) et agencés pour modifier les signaux d'excitation (202) pour modifier en conséquence les caractéristiques physiques des signes imprimés ultérieurement pour les corriger.

**2.** Imprimante selon la revendication 1, dans laquelle la tête d'impression (90) est apte à effectuer une impression thermique à matrice de points et comprend une pluralité d'éléments d'impression (94) actionnables individuellement disposés en un réseau de points prédéterminé, chaque élément étant sensible à l'application d'un signal d'excitation (202) à celui-ci et générant de la chaleur pour imprimer un point correspondant sur la feuille (14), la dimension du point étant liée à la quantité d'énergie du signal d'excitation appliqué.

**3.** Imprimante selon la revendication 1 ou la revendication 2, dans laquelle les moyens de réglage de la caractéristique d'impression sont agencés pour modifier la quantité d'énergie des signaux d'excitation (202) en réponse au signal de sortie d'analyseur (206).

**4.** Imprimante selon la revendication 1, la revendication 2 ou la revendication 3, dans laquelle les moyens de réglage de la caractéristique d'impression sont agencés pour modifier la durée du signal d'excitation (202) en réponse au signal de sortie d'analyseur (206).

**5.** Imprimante selon l'une quelconque des revendications précédentes, dans laquelle les moyens de réglage de la caractéristique d'impression sont agencés pour agir sur le signal de sortie d'analyseur (206) pour calculer l'écart dimensionnel de signes imprimés (12) par rapport à des dimensions désirées prédéterminées et pour modifier la quantité d'énergie et/ou la durée des signaux d'excitation (202) conformément à la valeur de cet écart dimensionnel pour réduire l'écart dimensionnel de signes ultérieurement imprimés (12).

**6.** Imprimante selon la revendication 5, comprenant en outre un dispositif d'impression de vide (122) actionnable sélectivement pour imprimer une indication de vide sur une zone de signes imprimés (12), les moyens de commande (200) comprenant des moyens (50) pour actionner le dispositif d'impression de vide lorsque l'écart dimensionnel dépasse une limite prédéterminée.

**7.** Imprimante selon la revendication 6, dans laquelle les moyens de commande (200) commandent normalement les moyens d'impression pour imprimer des zones successives de signes (12) mais sont également actionnables après un actionnement du dispositif d'impression de vide (122) pour réimprimer la zone laissée vide.

**8.** Imprimante selon la revendication 5, la revendication 6 ou la revendication 7, dans laquelle la tête d'impression (90) est agenceé pour imprimer des signes comportant des symboles de code à barres possédant des barres imprimées alignées séparées par des espaces non imprimés, et dans laquelle les moyens de réglage de la caractéristique d'impression sont agencés pour déterminer l'écart dimensionnel en tant qu'écart de la largeur de barres ou d'espaces imprimés par rapport à des largeurs désirées prédéterminées, réduisant ainsi l'écart de largeur de barre de symboles de code à barres ultérieurement imprimés.

**9.** Imprimante (10) selon la revendication 1, comportant en outre un dispositif d'impression de vide (122) actionnable sélectivement pour imprimer une indication de vide sur une zone de signes imprimés (12) sur la feuille (14); les moyens de commande (200) comprenant également des moyens pour fonctionner après réception des signaux d'analyse afin de calculer une condition hors limites des dimensions ou des caractéristiques de réflexion des signes imprimés (12), les moyens de commande étant sensibles, lorsqu'une condition hors limites calculée existe, pour actionner le dispositif d'impression de vide (122) pour imprimer une indication de vide sur la zone correspondante de signes imprimés.

**10.** Procédé de fonctionnement d'une imprimante possédant une tête d'impression (90) sensible à des signaux d'excitation de tête appliqués, comprenant l'analyse de signes (12) imprimés sur une feuille (14) par l'imprimante et la production d'un signal de sortie d'analyseur (206) représentatif des signes imprimés analysés (12); caractérisé par l'opération, après réception du signal de sortie d'analyseur, de détermination de l'écart dimensionnel des signes (12) par rapport à des dimensions désirées prédéterminées; la modification de la quantité d'énergie des signaux d'excitation de tête (202) conformément à l'écart dimensionnel pour réduire l'écart dimensionnel de signes inprimés ultérieurement; et l'impression d'autres signes (12).

**11.** Procédé selon la revendication 10, dans lequel l'opération, après réception du signal de sortie d'analyseur, est de déterminer l'écart dimensionnel en largeur des signes imprimés analysés (12) par rapport à des dimensions de largeur désirées prédéterminées des signes imprimés, le long du trajet d'analyse.

**12.** Procédé selon la revendication 10 ou la revendication 11, dans lequel la quantité d'énergie des signaux d'excitation de tête (202) est modifiée en faisant varier la durée des signaux d'excitation de tête conformément à l'écart dimensionnel déterminé.

**13.** Procédé selon l'une quelconque des revendications 10 à 12, comprenant également l'impression d'une indication de vide sur la feuille en association avec les signes imprimés analysés (12) lorsque l'écart dimensionnel déterminé dépasse des limites prédéterminées.

**14.** Procédé selon la revendication 13, qui comprend l'étape supplémentaire, après impression de l'indication de vide, de réimpression des signes (12) dans une zone d'impression successive.

**15.** Procédé selon l'une quelconque des revendications 10 à 14, dans lequel l'imprimante est une imprimante à matrice de points apte à imprimer des symboles de code à barres, l'écart dimensionnel déterminé est l'écart dimensionnel des signaux de code à barres analysés par rapport à des dimensions désirées prédéterminées, et la quantité d'énergie est modifiée pour faire varier la dimension d'éléments de points imprimés ultérieurs afin de réduire l'écart dimensionnel de symboles de code à barres imprimés ultérieurement.

**16.** Procédé selon la revendication 15, dans lequel l'écart dimensionnel est déterminé à partir de la différence des valeurs mesurées et désirées des largeurs de barres ou d'espaces.

**17.** Procédé d'impression répétitive de signes comprenant l'impression des signes (12) sur une zone avec une tête d'impression (90) possédant des éléments d'impression pouvant être commandés et l'analyse électronique des signes après l'impression; caractérisé en ce que, pour corriger les signes et corriger la qualité au cours d'impression répétées successives desdits signes, le procédé comporte en outre les étapes de comparaison des signes imprimés (12) à une norme prédéterminée des signes et de production d'un signal de commande d'impression représentatif d'une différence quelconque entre la norme prédéterminée et les signes imprimés; l'utilisation du signal de commande d'impression pour commander les éléments d'impression de la tête d'imression (90) pour modifier les caractéristiques de signes successivement imprimés afin de les corriger.

**18.** Procédé selon l'une quelconque des revendications 10 à 17, comprenant en outre un procédé de détermination du bord antérieur de chacune d'une série d'étiquettes disposées en succession (158), et de déplacement des étiquettes dans une position adjacente à des éléments d'impression à l'intérieur de l'imprimante, comportant les étapes consistant à déplacer chaque étiquette (158) successivement à travers un premier trajet de lumière constitué d'une première source de lumière (148) et d'un premier photodétecteur (150) apte à détecter de la lumière à travers l'étiquette; à produire un premier signal électrique représentatif du changement d'opacité lorsque l'étiquette est déplacée à travers le premier trajet de lumière; à déplacer en outre l'étiquette à travers un second trajet de lumière constitué d'une seconde source de lumière (148) et d'un second photodétecteur (150) apte à détecter de la lumière à travers l'étiquette; à produire un second signal électrique représentatif du changement d'opacité lorsque l'étiquette est déplacée à travers le second trajet de lumière; et à comparer le premier signal électrique au second signal électrique et à produire à partir de cette comparaison un signal de déclenchement numérique pour déclencher un programme d'exploitation dans un processeur de commande, de telle sorte qu'un programme d'opération d'impression est déclenché, actionnant l'imprimante (10) pour imprimer des signes (12) sur l'étiquette (158) lorsque l'étiquette est disposée adjacente aux éléments d'impression.

**19.** Procédé selon la revendication 18, comportant en outre les étapes consistant à faire progresser incrémentalement les étiquettes individuelles (158) provenant des premier et second trajets de lumière d'une distance prédéterminée le long d'un trajet d'étiquette dans la position adjacente aux éléments d'impression grâce à un moteur pas à pas (80).

**20.** Procédé selon la revendication 18 ou la revendication 19, dans lequel chacune des étiquettes (158) est disposée sur une feuille support s'étendant longitudinalement qui est avancée le long d'un trajet de déplacement de feuille par un moteur progressant incrémentalement (80), et dans lequel les premier et second trajets de lumière comportent des photodétecteurs (148) aptes à détecter de la lumière à travers la feuille support et les étiquettes (158), et dans lequel les premier et second signaux électriques ainsi produits sont des signaux représentatifs d'une variation d'opacité de la feuille support sans l'étiquette (158) sur celle-ci et de la feuille support portant l'étiquette.

**21.** Procédé selon l'une quelconque des revendications 18 à 20 dans lequel, après chacune des étapes de production des premier et second signaux électriques, les signaux électriques ne sont pas comparés à moins que chacun des signaux électriques dépasse une tension minimum prédéterminée représentative d'une variation minimum d'opacité.

**22.** Imprimante selon la revendication 1 comportant en outre un dispositif pour déterminer le bord antérieur de chacune d'une série d'étiquettes disposées en succession (158), et pour déplacer les étiquettes en position adjacente aux éléments d'impression à l'intérieur de l'imprimante, comportant des moyens (24) pour déplacer chaque étiquette (158) successivement à travers un premier trajet de lumière constitué d'une première source de lumière (148) et d'un premier photodétecteur (150) apte à détecter de la lumière à travers l'étiquette et un second trajet de lumière constitué d'une seconde source de lumière (148) et d'un second photodétecteur (150) apte à détecter de la lumière à travers l'étiquette; des moyens (160) pour produire un premier signal électrique représentatif de la variation d'opacité lorsque l'étiquette est déplacée à travers le premier trajet de lumière; des moyens (162) pour produire un second signal électrique représentatif de la variation d'opacité lorsque l'étiquette est déplacée à travers le second trajet de lumière, un comparateur (164,165,166) comparant le premier signal électrique au second signal électrique et produisant à partir de la comparaison un signal de déclenchement numérique pour déclencher un programme d'exploitation dans un processeur de commande, de telle sorte qu'un programme d'opération d'impression est déclenché actionnant l'imprimante (10) pour imprimer des signes (12) sur l'étiquette (158) lorsque l'étiquette est disposée adjacente aux éléments d'impression.

**Patentansprüche**

**1.** Drucker (10) mit einer Druckeinrichtung, die einen Druckkopf (90) zum Drucken von Zeichen (12) auf ein Blatt (14) aufgrund von angelegten Ansteuersignalen besitzt; ferner mit einer Abtasteinrichtung (100) zum Abtasten der Zeichen (12) und zum Erzeugen eines diese darstellenden Abtasterausgangssignals (206); und mit einer mit der Abtasteinrichtung und der Druckeinrichtung verbundenen Steuereinrichtung (200) zum Erzeugen von Ansteuersignalen (202) und zum Anlegen dieser Ansteuersignale an den Druckkopf (90), um diesen zum Drucken zu betätigen,

dadurch gekennzeichnet,

daß die Steuereinrichtung (200) eine auf das Abtasterausgangssignal ansprechende und zum Einstellen der Druckbeschaffenheit dienende Einrichtung besitzt, die durch Änderung der Ansteuersignale (202) eine entsprechende Änderung der physikalischen Eigenschaften der danach gedruckten Zeichen bewirkt, um diese zu korrigieren.

**2.** Drucker nach Anspruch 1, in dem der Druckkopf (90) zum Punktraster-Thermodruck geeignet ist und eine Mehrzahl von einzelnen betätigbaren Druckelementen (94) in einer vorherbestimmten Einzelpunktanordnung umfaßt, von denen jedes auf ein daran angelegtes Ansteuersignal (202) durch die Erzeugung von Wärme anspricht, so daß auf das Blatt (14) ein entsprechender Punkt gedruckt wird, dessen Größe mit dem Energiegehalt des angelegten Ansteuersignals in Beziehung steht.

**3.** Drucker nach Anspruch 1, in dem die zum Einstellen der Druckbeschaffenheit dienende Einrichtung zum Ändern des Energiegehalts der Ansteuersignale (202) aufgrund des Abtasterausgangssignals (206) dient.

**4.** Drucker nach Anspruch 1 oder 2 oder 3, in dem die zum Einstellen der Druckbeschaffenheit dienende Einrichtung zum Ändern der Dauer des Ansteuersignals (202) aufgrund des Abtasterausgangssignals (206) dient.

**5.** Drucker nach einem der vorhergehenden Ansprüche, in dem die zum Einstellen der Druckbeschaffenheit dienende Einrichtung dazu dient, durch Verarbeitung des Abtasterausgangssignals (206) die Maßabweichung der gedruckten Zeichen (12) von vorherbestimmten Sollmaßen zu berechnen und den Energiegehalt und/oder die Dauer der Ansteuersignale (202) im Sinne einer Verminderung der Maßabweichung von danach gedruckten Zeichen (12) zu ändern.

**6.** Drucker nach Anspruch 5, mit einer Leerstellen-Druckeinrichtung (122), die zum Drucken einer Leerstelle auf ein Feld von gedruckten Zeichen (12) wahlweise betätigbar ist, wobei die Steuereinrichtung (200) eine Einrichtung (50) zum Betätigen der Leerstellen-Druckeinrichtung bei einer einen vorherbestimmten Grenzwert übersteigenden Maßabweichung besitzt.

**7.** Drucker nach Anspruch 6, in dem die Steuereinrichtung (200) normalerweise die Druckeinrichtung derart steuert, daß sie aufeinanderfolgende Felder von Zeichen (12) druckt, aber nach einer Betätigung der Leerstellen-Druckeinrichtung (122) auch zum erneuten Bedrukken des leergedruckten Feldes betätigbar ist.

**8.** Drucker nach Anspruch 5 oder 6 oder 7, in dem der Druckkopf (90) zum Drucken von Zeichen dient, die Strichcodesymbole mit miteinander fluchtenden und durch unbedruckte Zwischenräume voneinander getrennten Strichen besitzen, und in dem die zum Einstellen der Druckbeschaffenheit dienende Einrichtung dazu dient, als Maßabweichung die Abweichung der Breiten von gedruckten Strichen oder Zwischenräumen von vorherbestimmten Sollbreiten zu bestimmen und aufgrund dessen die Abweichung der Strichbreite von danach gedruckten Strichcodesymbolen zu vermindern.

**9.** Drucker (10) nach Anspruch 1, der ferner eine Leerstellen-Druckeinrichtung (122) besitzt, die zum Drucken einer Leerstelle auf ein Feld von gedruckten Zeichen (12) auf dem Blatt (14) wahlweise betätigbar ist, wobei die Steuereinrichtung (200) ferner eine Einrichtung besitzt, die durch Verarbeitung der Abtastsignale eine grenzwertüberschreitende Beschaffenheit der gedruckten Zeichen (12) hinsichtlich ihrer Maße oder ihrer Reflexionseigenschaften berechnet, und die Steuereinrichtung auf eine berechnete grenzwertüberschreitende Beschaffenheit dadurch anspricht, daß sie die Leerstellen-Druckeinrichtung (122) zum Drukken einer Leerstelle auf das entsprechende Feld der gedruckten Zeichen veranlaßt.

**10.** Verfahren zum Betätigen eines Druckers, der einen Druckkopf (90) besitzt, der auf an ihn angelegte Kopfansteuersignale anspricht, wobei von dem Drucker auf ein Blatt (14) gedruckte Zeichen (12) abgetastet werden und ein den gedruckten und abgetasteten Zeichen (12) entsprechendes Abtasterausgangssignal (206) erzeugt wird, dadurch gekennzeichnet, daß durch Verarbeiten des Abtasterausgangssignals die Maßabweichung der Zeichen (12) gegenüber vorherbestimmten Sollmaßen festgestellt wird und daß aufgrund der Maßabweichung der Energiegehalt der Kopfansteuersignale (202) im Sinne einer Verminderung der Maßabweichung von danach gedruckten Zeichen geändert wird, und daß weitere Zeichen (12) gedruckt werden.

**11.** Verfahren nach Anspruch 10, in dem durch Verarbeiten des Abtasterausgangssignals die Abweichung der Breite der gedruckten und abgetasteten Zeichen (12) von einer vorherbestimmten Sollbreite der gedruckten Zeichen längs des Abtastweges festgestellt wird.

**12.** Verfahren nach Anspruch 10 oder 11, in dem zum Ändern des Energiegehalts der Kopfansteuersignale (202) die Dauer der Kopfansteuersignale aufgrund der festgestellten Maßabweichung geändert wird.

**13.** Verfahren nach einem der Ansprüche 10 bis 12, in dem auf das Blatt in Zuordnung zu den gedruckten und abgetasteten Zeichen (12) eine Leerstelle gedruckt wird, wenn die festgestellten Maßabweichungen vorherbestimmte Grenzwerte übersteigen.

**14.** Verfahren nach Anspruch 13, in dem nach dem Drucken der Leerstelle in einem zusätzlichen Schritt die Zeichen (12) in einem darauffolgenden Druckfeld erneut gedruckt werden.

**15.** Verfahren nach einem der Ansprüche 10 bis 14, in dem ein Drucker ein Punktrasterdrucker zum Drucken von Strichcodesymbolen ist, die festgestellte Maßabweichung die Maßabweichung der abtgetasteten Strichcodesignale von vorherbestimmten Sollmaßen ist, und durch die Änderung des Energiegehalts die Größe von danach gedruckten Punktelementen im Sinne einer Verminderung der Maßabweichung von danach gedruckten Strichcodesymbolen geändert wird.

**16.** Verfahren nach Anspruch 15, in dem die Maßabweichung aufgrund der Differenz zwischen den gemessenen und den Sollwerten der Strich- und Zwischenraumbreiten festgestellt wird.

**17.** Verfahren zum wiederholten Drucken von Zeichen, in dem die Zeichen (12) auf ein Feld mit einem Druckkopf (90) gedruckt werden, der steuerbare Druckelemente besitzt, und die Zeichen nach dem Drucken elektronisch abgetastet werden, dadurch gekennzeichnet, daß zur Korrektur der Zeichen und zur Korrektur der Beschaffenheit von aufeinanderfolgend wiederholten Abdrucken der Zeichen das Verfahren weitere Schritte umfaßt, in denen die gedruckten Zeichen (12) mit einer vorher definierten Norm für die Zeichen verglichen werden, ein Drucksteuersignal erzeugt wird, das einer etwaigen Differenz zwischen der vorher definierten Norm und den gedruckten Zeichen entspricht, und das Drucksteuersignal zur Korrektur von danach gedruckten Zeichen durch Ändern ihrer Beschaffenheit verwendet wird.

**18.** Verfahren nach einem der Ansprüche 10 bis 17 mit einem weiteren Verfahren, in dem der vorlaufende Rand jedes Etiketts in einer Reihe von aufeinanderfolgend angeordneten Etiketten festgestellt und die Etiketten in dem Drucker in Druckelementen benachbarte Stellungen bewegt werden, mit folgenden Schritten: Die Etiketten (158) werden einzeln nacheinander durch eine erste Lichtschranke hindurchbewegt, die eine erste Lichtquelle (148) und einen ersten Photodetektor (150) besitzt, der zum Erfassen von durch das Etikett getretenem Licht geeignet ist; es wird ein erstes elektronisches Signal erzeugt, das die Veränderung der Opazität während der Bewegung des Etiketts durch die erste Lichtschranke darstellt; das Etikett wird durch eine zweite Lichtschranke hindurchbewegt, die eine zweite Lichtquelle (148) und einen zweiten Photoempfänger (150) besitzt, der zum Erfassen von durch das Etikett getretenem Licht geeignet ist; es wird ein zweites elektrisches Signal erzeugt, das die Veränderung der Opazität beim Bewegen des Etiketts durch die zweite Lichtschranke darstellt, das erste elektrische Signal und das zweite elektrische Signal werden miteinander verglichen, und aufgrund dessen wird ein digitales Aufrufsignal zum Aufrufen eines Betätigungsunterprogramms in einem Steuerprozessor erzeugt wird, in dem daraufhin ein Druckbetriebsunterprogramm aufgerufen wird, durch das der Drucker (10) zum Drucken von Zeichen (12) auf das Etikett (158) betätigt wird, wenn das Etikett im Bereich der Druckelemente positioniert ist.

**19.** Verfahren nach Anspruch 18, in dem in weiteren Schritten die einzelnen Etiketten (158) von einem Schrittmotor (80) von der ersten und der zweiten Lichtschranke aus schrittweise über eine vorherbestimmte Strecke längs einer Etikettenbahn in die den Druckelementen benachbarte Stellung bewegt werden.

**20.** Verfahren nach Anspruch 18 oder 19, in dem jedes der Etiketten (158) auf einem sich in der Längsrichtung erstreckenden Trägerblatt positioniert wird, das von schrittweise fortschaltenden Motormitteln (80) längs einer Blattbewegungsbahn vorwärtsbewegt wird, wobei die erste und die zweite Lichtschranke Photodetektoren (148) umfassen, die zum Erfassen von durch das Trägerblatt und die Etiketten getretenem Licht geeignet sind, und das erste und das zweite auf diese Weise erzeugte Signal den Unterschied zwischen der Opazität des Trägerblattes ohne das darauf befindliche Etikett (158) und der Opazität des Trägerblattes mit dem darauf befindlichen Etikett (158) darstellen.

**21.** Verfahren nach einem der Ansprüche 18 bis 20, in dem nach jedem der Schritte, in denen das erste und das zweite elektrische Signal erzeugt werden, die elektrischen Signale nur miteinander verglichen werden, wenn jedes der elektrischen Signale eine vorherbestimmte Mindestspannung übersteigt, die eine minimale Differenz zwischen den Opazitäten darstellt.

**22.** Drucker nach Anspruch 1, der ferner eine Vorrichtung besitzt, die dazu dient, den vorlaufenden Rand jedes Etiketts einer Reihe von aufeinanderfolgend angeordneten Elementen (158) festzustellen und die Etiketten in dem Drucker in Druckelementen benachbarte Stellungen zu bewegen, mit einer Einrichtung (24) zum Bewegen jedes Etiketts (158) nacheinander durch eine erste Lichtschranke, die eine erste Lichtquelle (148) und einen ersten Photodetektor (150) umfaßt, der zum Erfassen von durch das Etikett getretenem Licht geeignet ist, sowie durch eine zweite Lichtschranke, die eine erste Lichtquelle (148) und einen zweiten Photodetektor (150) umfaßt, der zum Erfassen von durch das Etikett getretenem Licht geeignet ist; mit einer Einrichtung (160) zum Erzeugen eines ersten elektrischen Signals, das die Veränderung der Opazität bei der Bewegung des Etiketts durch die erste Lichtschranke darstellt, einer Einrichtung (162) zum Erzeugen eines zweiten elektrischen Signals, das die Veränderung der Opazität beim Bewegen des Etiketts durch die zweite Lichtschranke darstellt, mit einem Vergleicher (164, 165, 166) zum Vergleichen des ersten elektrischen Signals mit dem zweiten elektrischen Signal und zum Erzeugen eines von diesem Vergleich abhängigen digitalen Aufrufsignals zum Aufrufen eines Betätigungsunterprogramms in einem Steuerprozessor, in dem daraufhin ein Druckbetriebsunterprogramm aufgerufen wird, das bewirkt, daß der Drucker (10) zum Drucken von Zeichen (12) auf dem Etikett (158) betätigt wird, wenn das Etikett im Bereich der Druckelemente positioniert ist.

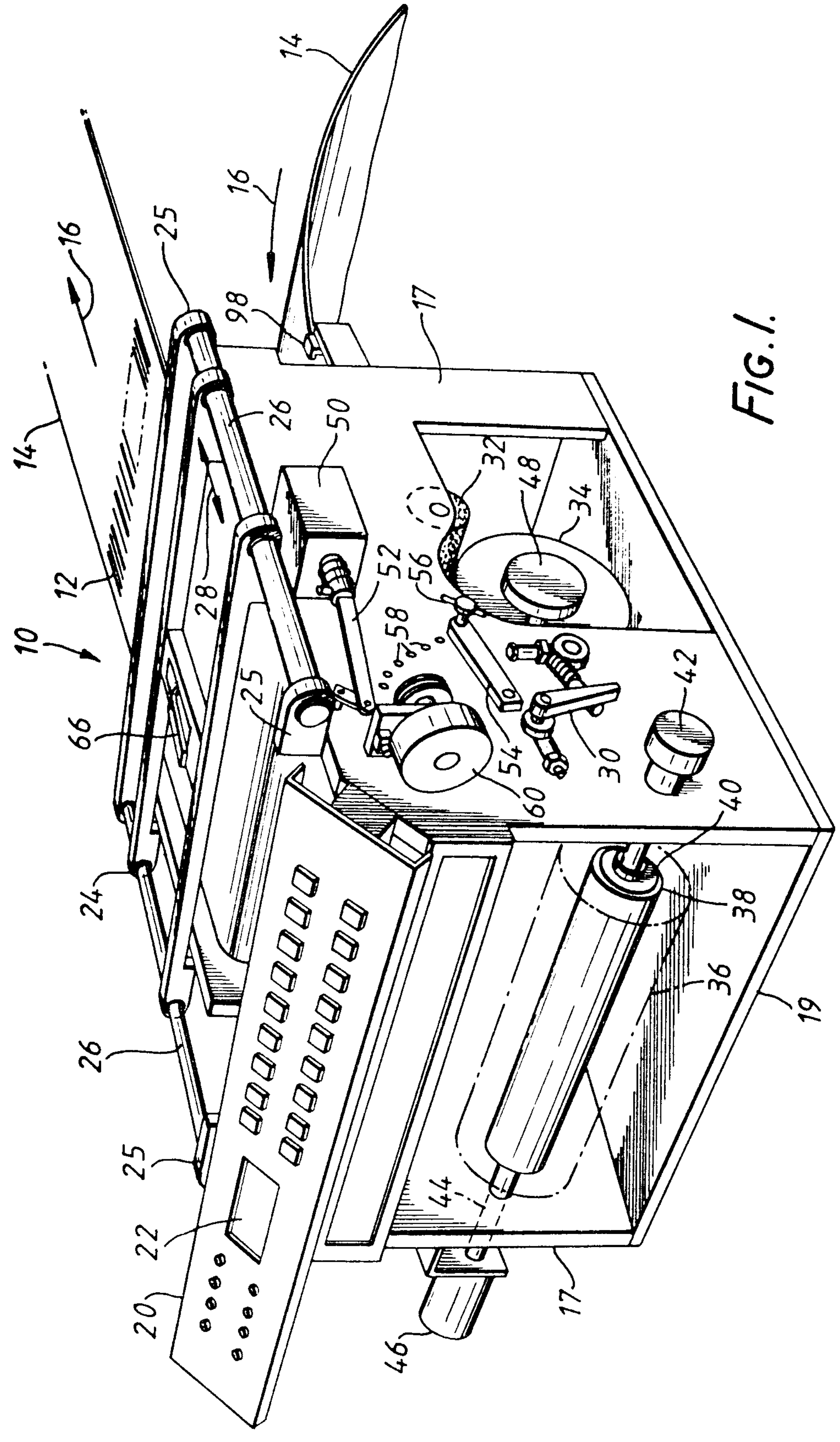
10
12
14
16
17
19
20
22
24
25
26
28
30
32
34
36
38
40
42
44
46
48
50
52
54
56
58
60
66
98

FIG. 1.

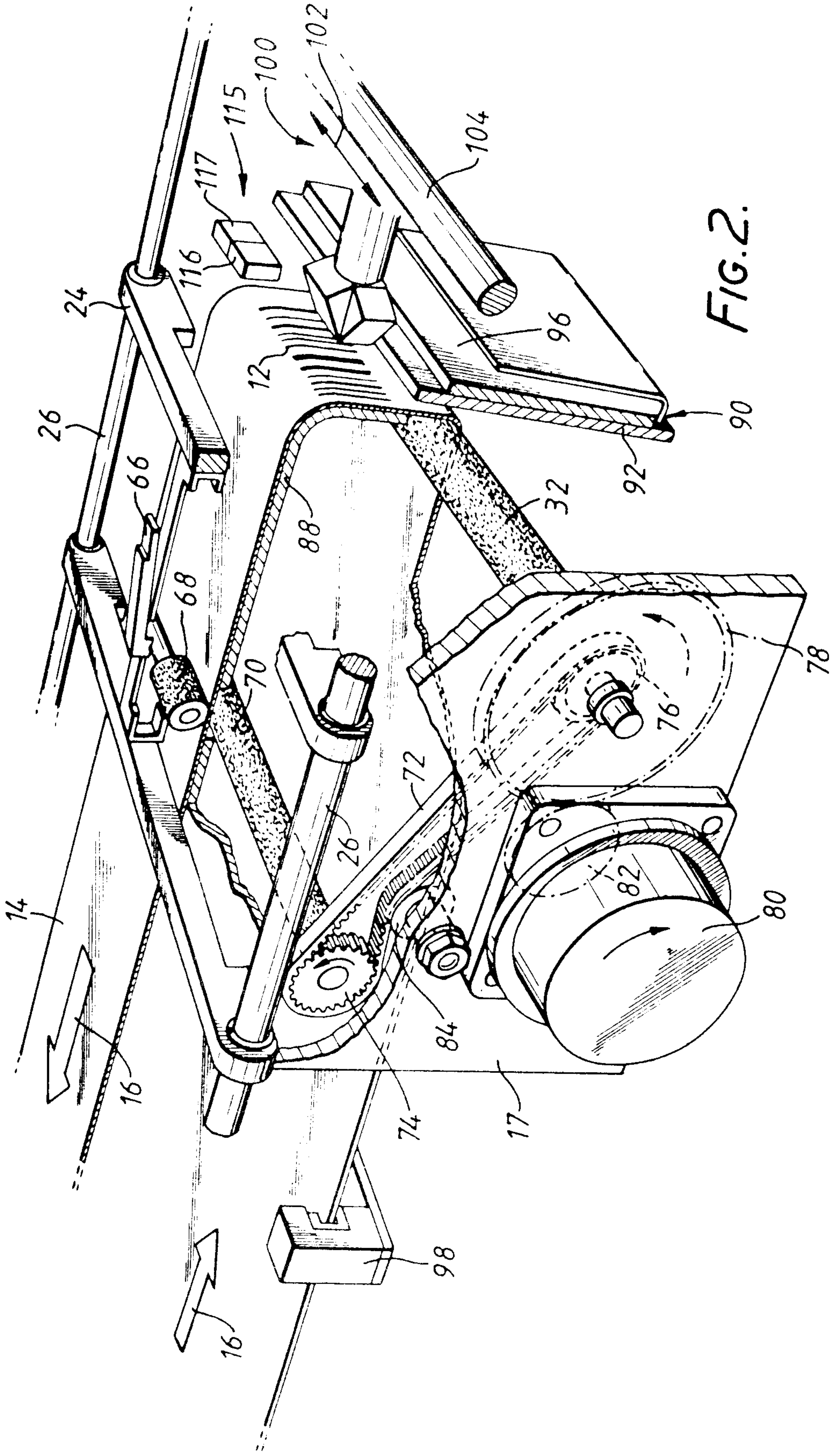
12
14
16
16
17
24
26
26
32
66
68
70
72
74
76
78
80
82
84
88
90
92
96
98
100
102
104
115
116
117

FIG.2.

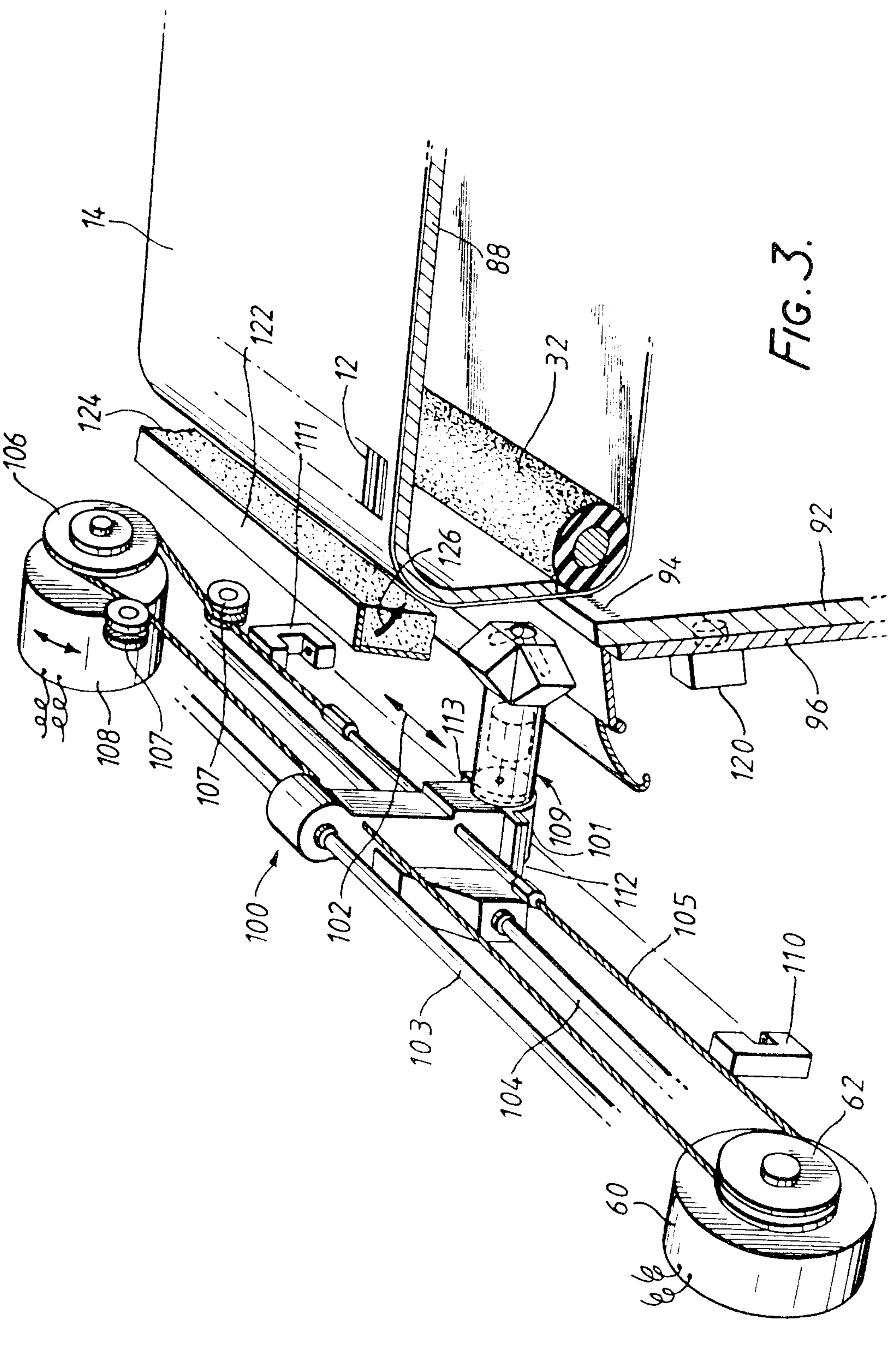
14
122
12
32
88
124
106
111
126
94
92
96
120
108
107
107
113
109
101
100
102
112
105
110
103
104
62
60

FIG. 3.

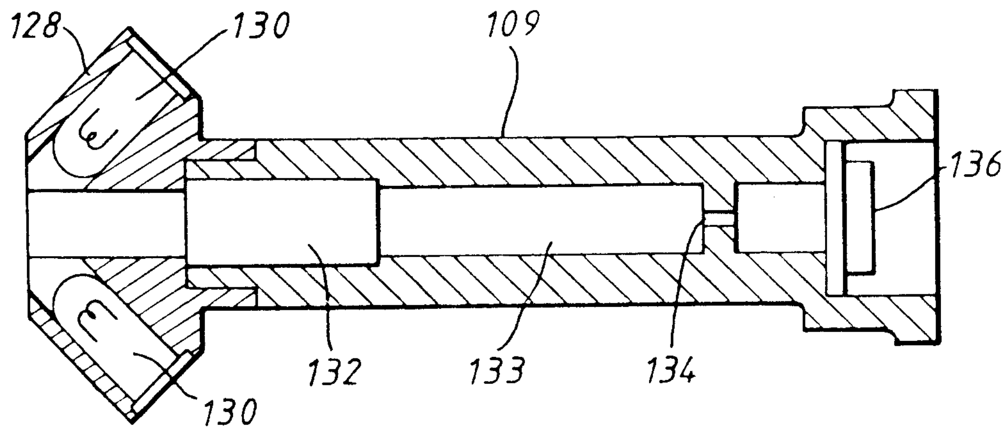


FIG. 4.

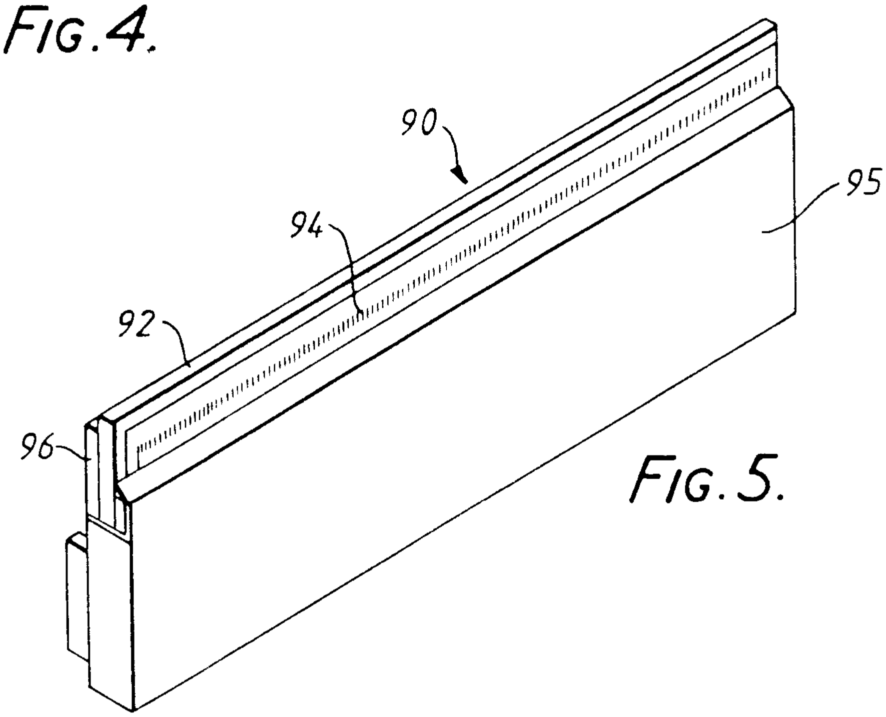


FIG. 5.

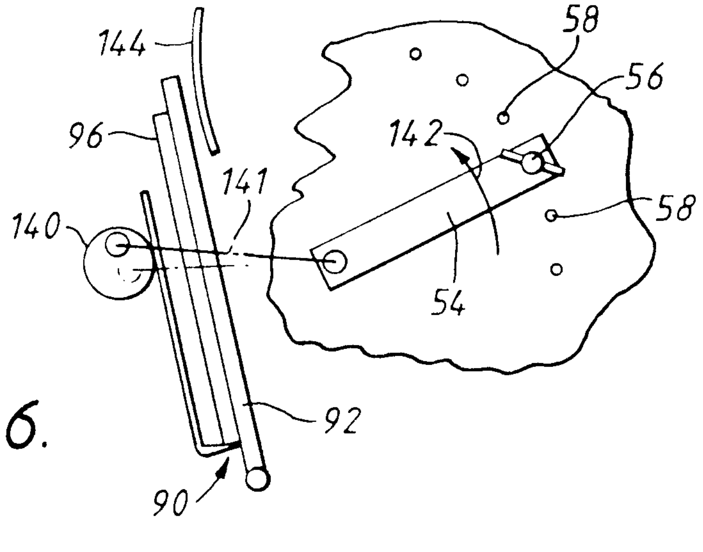


FIG. 6.

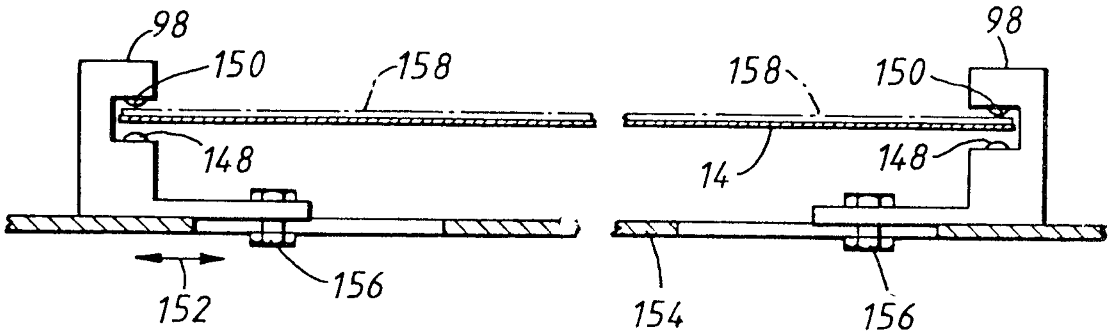


FIG.7.

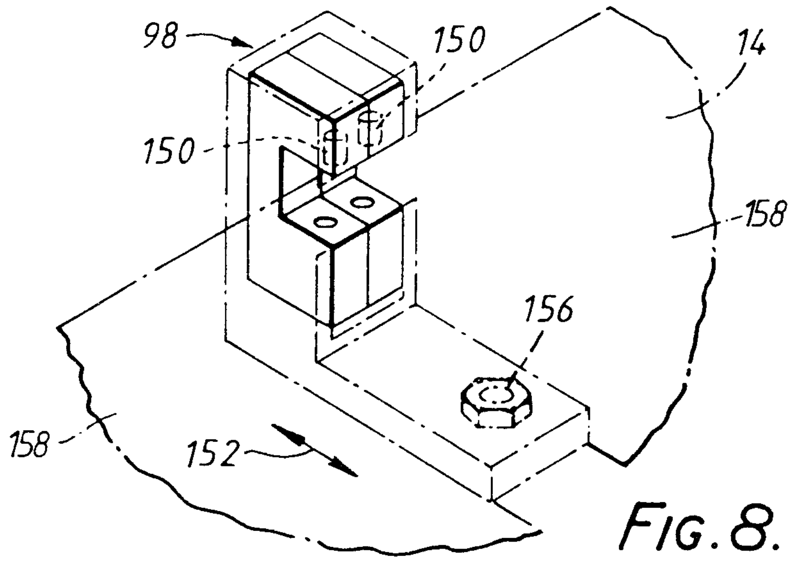


FIG.8.

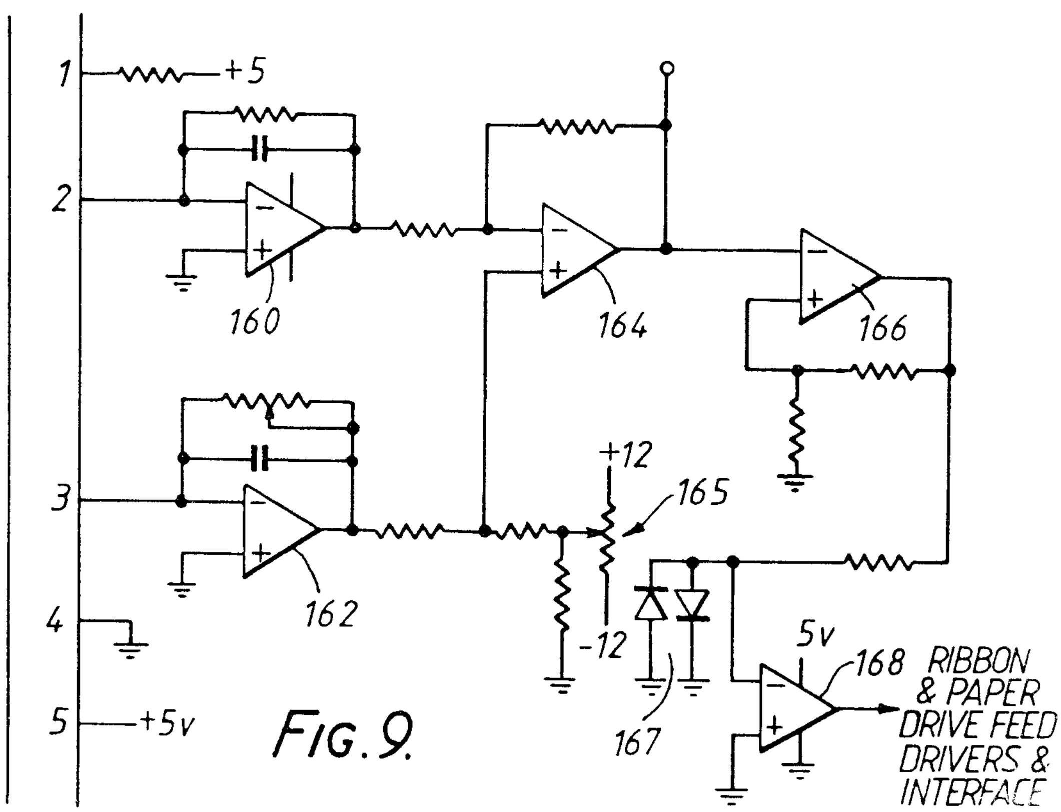


FIG.9.

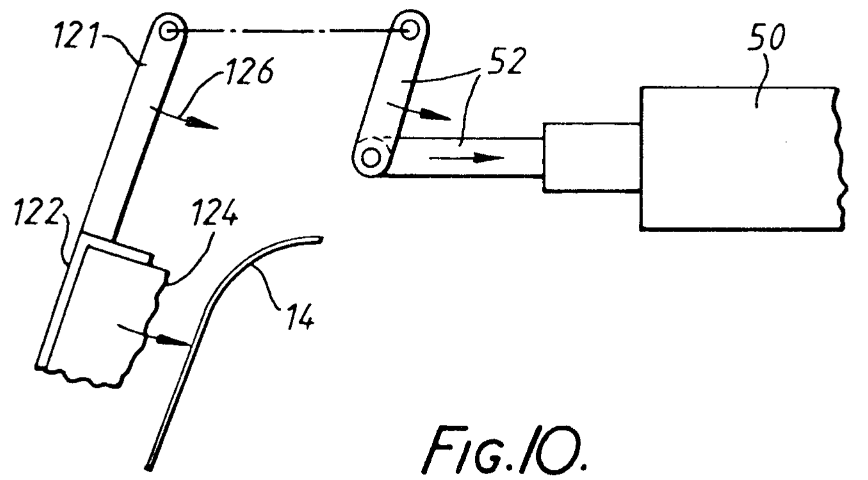
121
126
52
50
122
124
14

FIG.10.

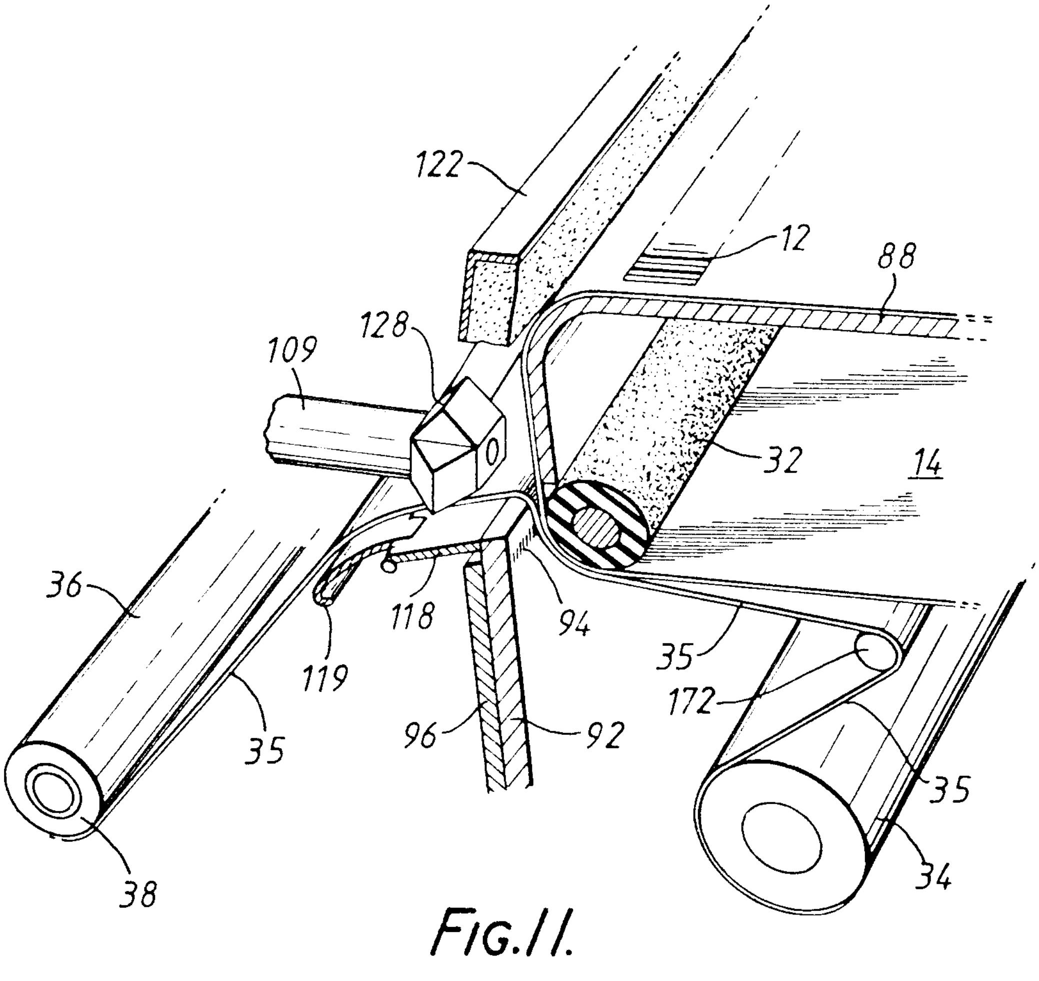
122
12
88
128
109
32
14
36
119
118
94
35
172
35
96
92
35
38
34

FIG.11.

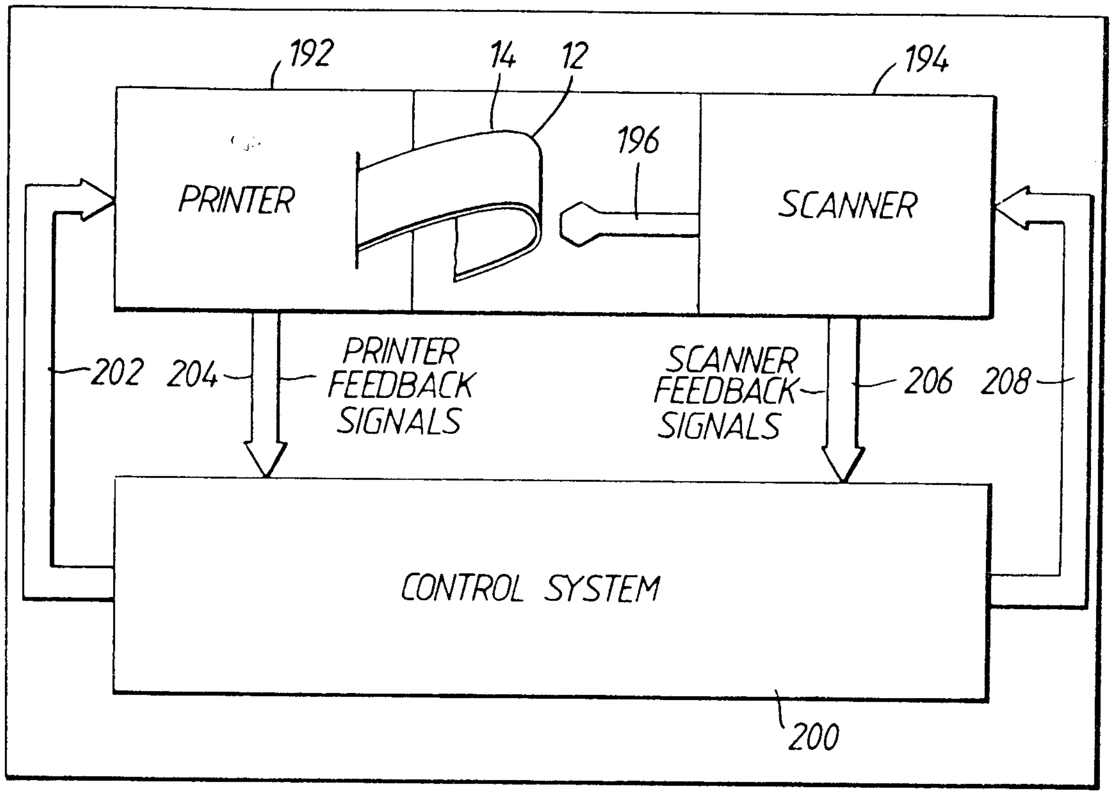
192
14
12
194
196
PRINTER
SCANNER
202
204
PRINTER
FEEDBACK
SIGNALS
SCANNER
FEEDBACK
SIGNALS
206
208
CONTROL SYSTEM
200

FIG. 12.

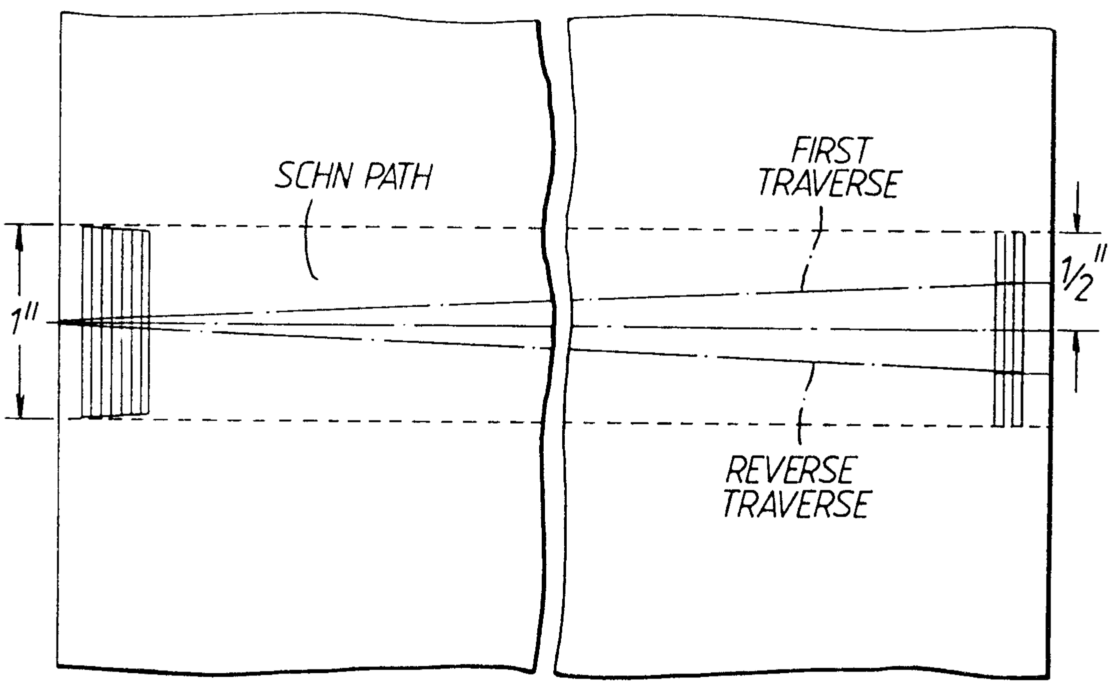
SCHN PATH
FIRST
TRAVERSE
1"
1/2"
REVERSE
TRAVERSE

FIG. 15.

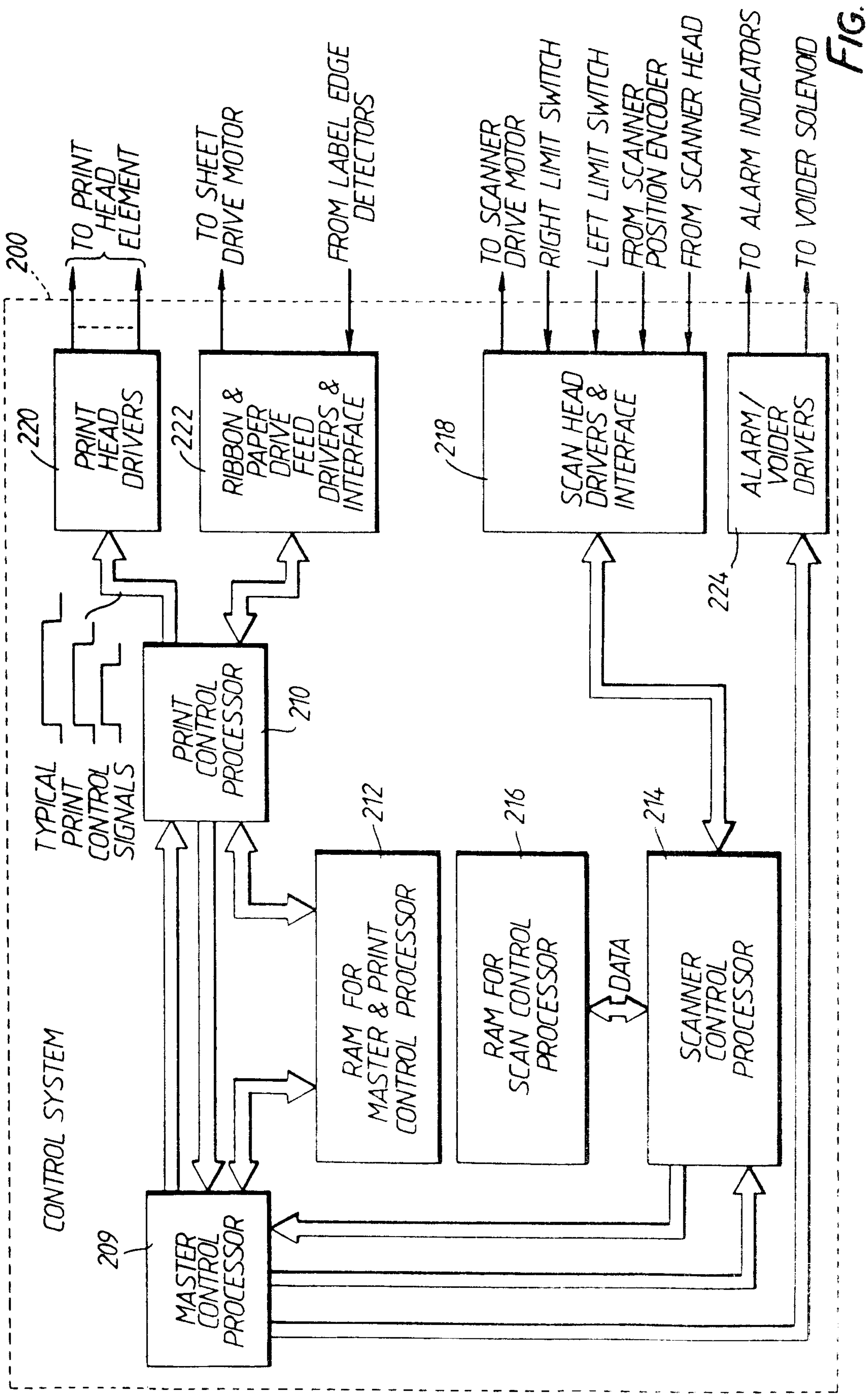
CONTROL SYSTEM
200
TO PRINT HEAD ELEMENT
TO SHEET DRIVE MOTOR
FROM LABEL EDGE DETECTORS
TO SCANNER DRIVE MOTOR
RIGHT LIMIT SWITCH
LEFT LIMIT SWITCH
FROM SCANNER POSITION ENCODER
FROM SCANNER HEAD
TO ALARM INDICATORS
TO VOIDER SOLENOID
220
PRINT HEAD DRIVERS
222
RIBBON & PAPER DRIVE FEED DRIVERS & INTERFACE
218
SCAN HEAD DRIVERS & INTERFACE
ALARM/ VOIDER DRIVERS
224
TYPICAL PRINT CONTROL SIGNALS
PRINT CONTROL PROCESSOR
210
212
RAM FOR MASTER & PRINT CONTROL PROCESSOR
216
RAM FOR SCAN CONTROL PROCESSOR
DATA
214
SCANNER CONTROL PROCESSOR
209
MASTER CONTROL PROCESSOR

FIG. 13.

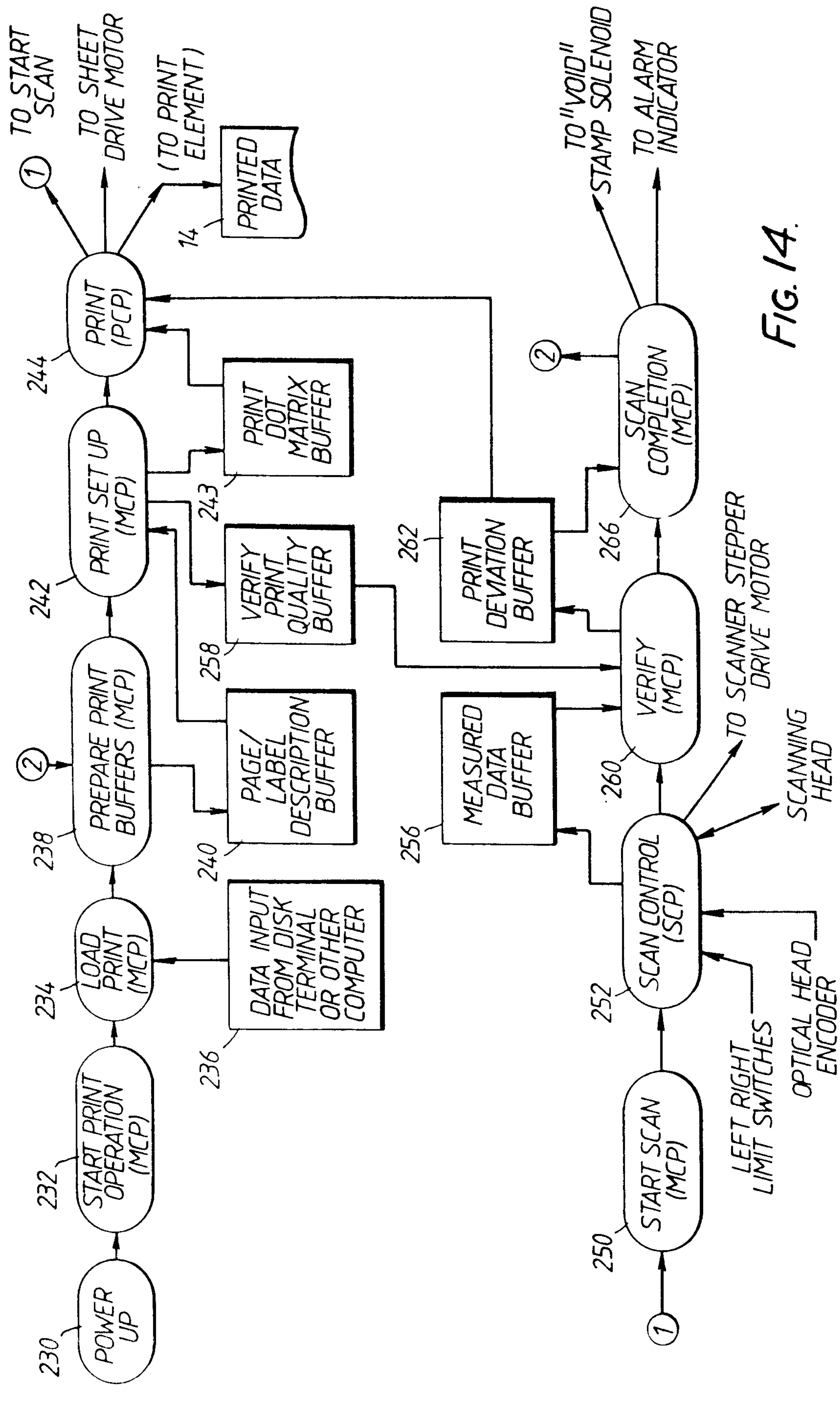
POWER UP
230
START PRINT OPERATION (MCP)
232
LOAD PRINT (MCP)
234
DATA INPUT FROM DISK TERMINAL OR OTHER COMPUTER
236
PREPARE PRINT BUFFERS (MCP)
238
PAGE/ LABEL DESCRIPTION BUFFER
240
PRINT SET UP (MCP)
242
PRINT DOT MATRIX BUFFER
243
PRINT (PCP)
244
TO START SCAN
TO SHEET DRIVE MOTOR
(TO PRINT ELEMENT)
PRINTED DATA
14
VERIFY PRINT QUALITY BUFFER
258
START SCAN (MCP)
250
SCAN CONTROL (SCP)
252
MEASURED DATA BUFFER
256
VERIFY (MCP)
260
PRINT DEVIATION BUFFER
262
SCAN COMPLETION (MCP)
266
TO "VOID" STAMP SOLENOID
TO ALARM INDICATOR
TO SCANNER STEPPER DRIVE MOTOR
SCANNING HEAD
LEFT RIGHT LIMIT SWITCHES
OPTICAL HEAD ENCODER
1
2

FIG. 14.

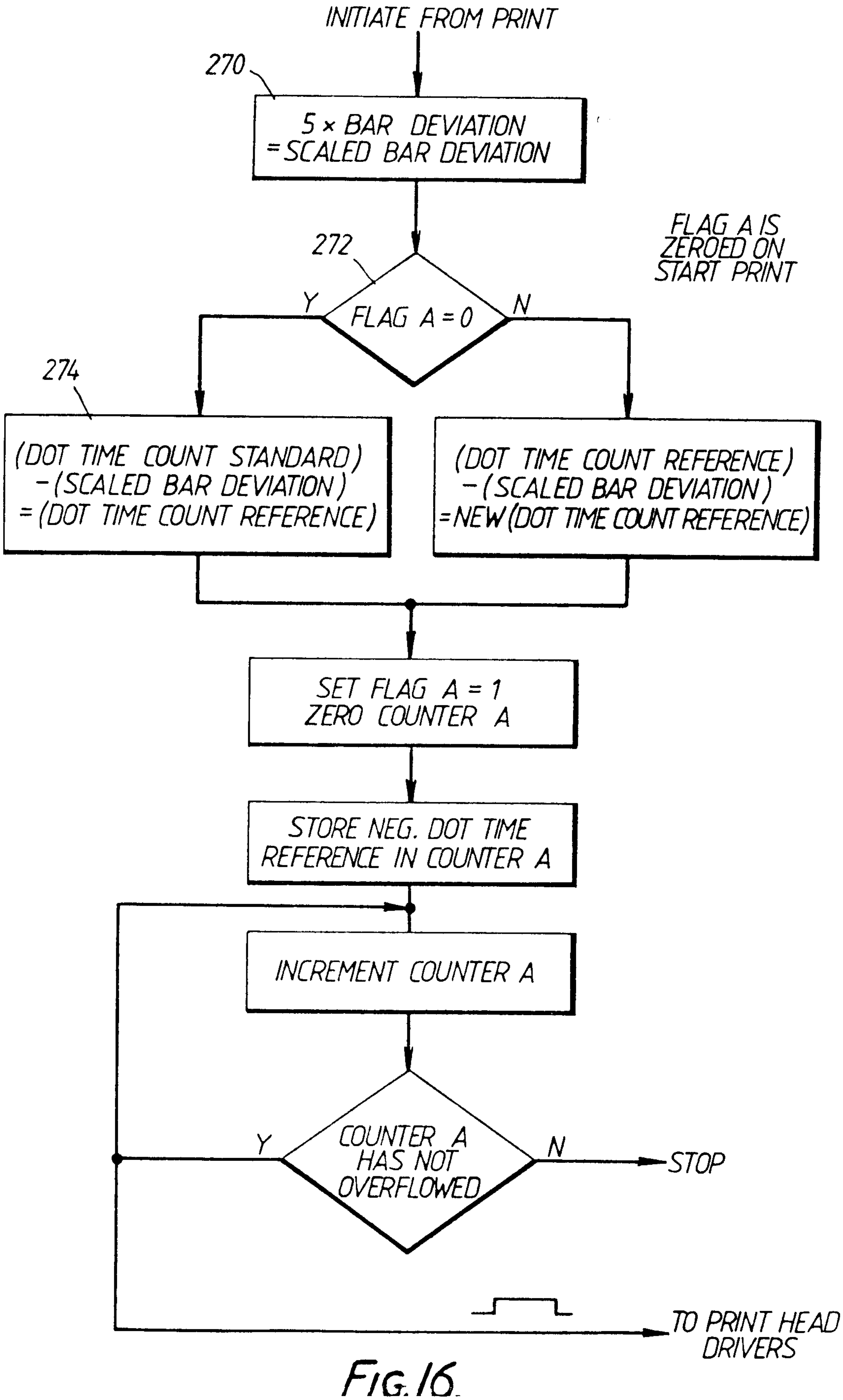

INITIATE FROM PRINT
270
5 × BAR DEVIATION
= SCALED BAR DEVIATION
FLAG A IS
ZEROED ON
START PRINT
272
FLAG A = 0
Y
N
274
(DOT TIME COUNT STANDARD)
− (SCALED BAR DEVIATION)
= (DOT TIME COUNT REFERENCE)
(DOT TIME COUNT REFERENCE)
− (SCALED BAR DEVIATION)
= NEW (DOT TIME COUNT REFERENCE)
SET FLAG A = 1
ZERO COUNTER A
STORE NEG. DOT TIME
REFERENCE IN COUNTER A
INCREMENT COUNTER A
COUNTER A
HAS NOT
OVERFLOWED
Y
N
STOP
TO PRINT HEAD
DRIVERS


FIG. 16

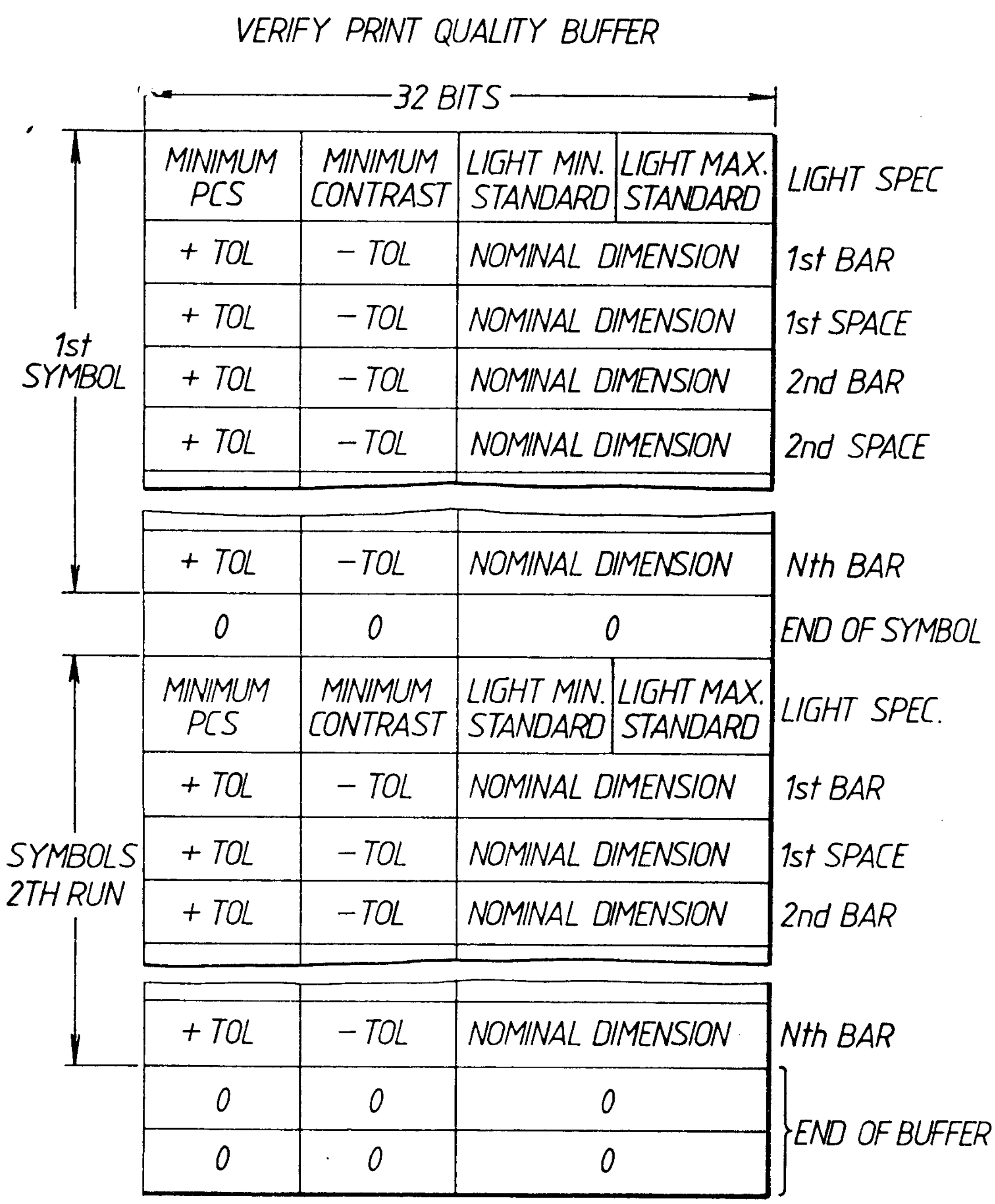
VERIFY PRINT QUALITY BUFFER
32 BITS
MINIMUM PCS
MINIMUM CONTRAST
LIGHT MIN. STANDARD
LIGHT MAX. STANDARD
LIGHT SPEC
+ TOL
– TOL
NOMINAL DIMENSION
1st BAR
1st SPACE
2nd BAR
2nd SPACE
1st SYMBOL
Nth BAR
0
END OF SYMBOL
LIGHT SPEC.
SYMBOLS 2TH RUN
END OF BUFFER

FIG. 17.

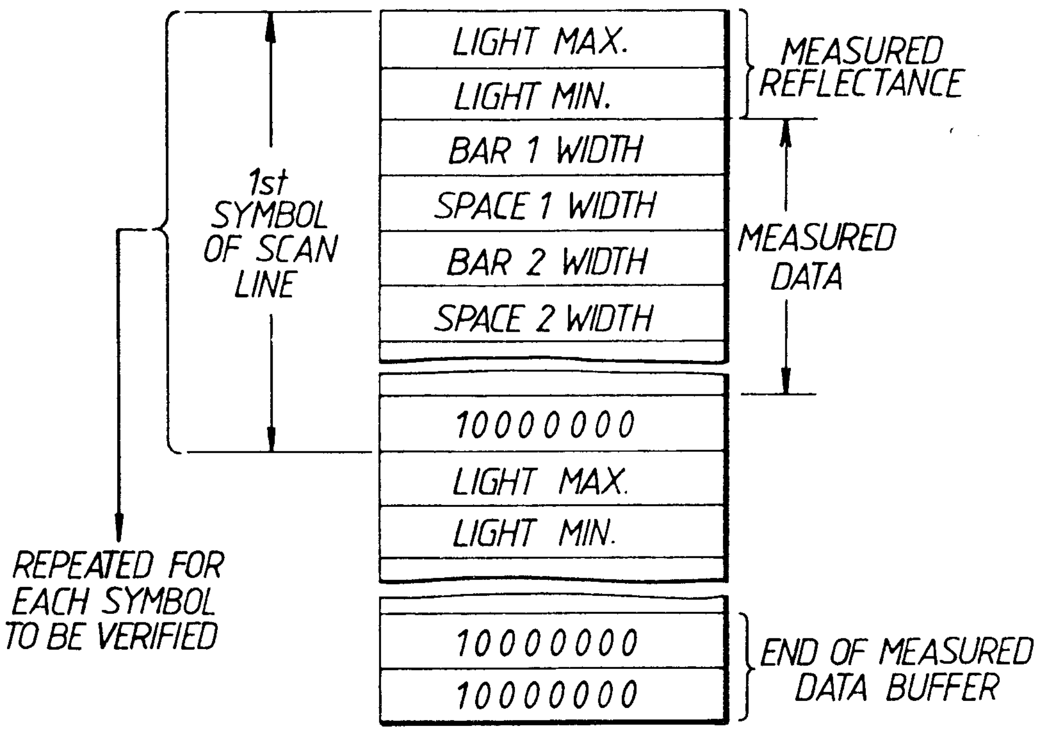
LIGHT MAX.
LIGHT MIN.
BAR 1 WIDTH
SPACE 1 WIDTH
BAR 2 WIDTH
SPACE 2 WIDTH
10000000
LIGHT MAX.
LIGHT MIN.
10000000
10000000
MEASURED REFLECTANCE
MEASURED DATA
END OF MEASURED DATA BUFFER
1st SYMBOL OF SCAN LINE
REPEATED FOR EACH SYMBOL TO BE VERIFIED

FIG. 18.

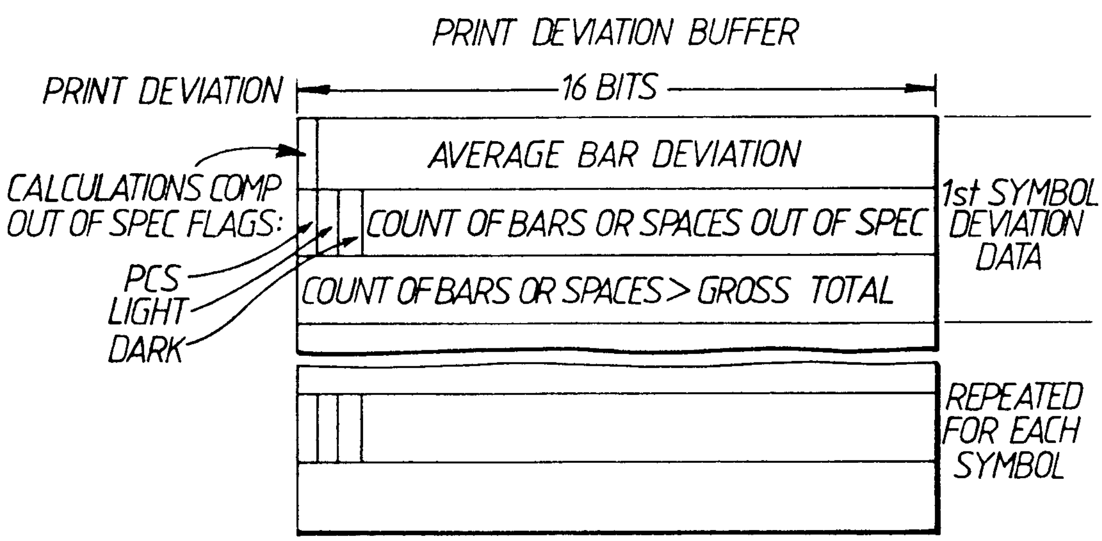
PRINT DEVIATION BUFFER
PRINT DEVIATION
16 BITS
AVERAGE BAR DEVIATION
CALCULATIONS COMP
OUT OF SPEC FLAGS:
PCS
LIGHT
DARK
COUNT OF BARS OR SPACES OUT OF SPEC
COUNT OF BARS OR SPACES > GROSS TOTAL
1st SYMBOL DEVIATION DATA
REPEATED FOR EACH SYMBOL

FIG. 19.